# EUROPEAN PATENT APPLICATION

(11) **EP 4 071 045 A1**
(43) Date of publication of application: **12.10.2022**
(21) Application number: 22460004.9
(22) Date of filing: 14.01.2022
(51) Int. Cl.: B63H 8/18, F16B 45/02

(54) **DEVICE USED FOR CONNECTING AND RELEASING A CONNECTION BETWEEN TWO ELEMENTS**

(30) Priority: 14.01.2021 PL 43665521
(71) Applicant: Action 13 Sp. z o.o., 20-868 Lublin (PL)
(72) Inventor:
(74) Representative: Marek, Joanna

(57) **Abstract**

The object of the invention is a device for connecting and releasing the connection between two elements (3, 8). Fastened to the body of the device (1) is an attached element (3) and a first connecting member or assembly (5, 501, 503) to which a second connectiong member (7) fastened to the detachable element (8) can be connected. Mounted on or in the body (1) is an active release member (10). On/in the body or/and on/in release member (10) and/or between the body (1) and the release member (10) there is an adjusting element or assembly (12, 1201, 1202). A movement of the first connecting member or assembly (5, 501, 503) is caused by acting on it with the active release member (10) and/or by acting on it with the active second connecting member (7).

## Description

The object of the invention is a multi-purpose mechanical device for easy connection and easy and secure release of the connection between two elements having a body, a release member and two intermediary connecting members. The object of the invention is, in particular, a device for connecting and releasing the connection between two elements, provided with the adjustable mechanism for adjusting a magnitude of a release force. The object of the invention is also a device for connecting and releasing the connection between two elements, wherein one of the connecting members may be connected to a release member. The object of the invention is particularly useful in situations where the aerodynamic lift, hydrodynamic lift, or load bearing occurs and where the priorities are stability of the connection, safety, and the ability to reliably release the connection, for example when connecting a pulling kite to a user, when towing a skier behind a boat, as well as in other sports, in transportation, etc.

In situations where high forces may be involved and safety is a priority, reliability of the connection, as well as reliability of the connection release function are key features of any equipment. Adjusting a magnitude of a release force, i.e. the force that must be applied to the active release element to release the connection, is of paramount importance, both to ensure that the connection can be reliably released each time, irrespective of the physical conditions of the individual user, and to prevent unwanted release of the connection, irrespective of the type of activity or manoeuvre being carried out.

"Kiteboarding" (alternatively "kitesurfing") is a recreational activity where the user controls a large wind-driven kite to be towed across the surface of water/snow/land while riding a board or other device. While kiteboarding, high speeds are attained, and high stresses occur. The kite can lift the user ("kiteboarder") up to 30 meters. Kiteboarding is an extreme sport where the user usually wears a trapeze harness ("harness"). The kite typically flies on four lines about 23 meters long, which together with the control bar and other components form the control system and transmit forces from the kite to the user. The lines are divided into front lines, which are transmitting the vast majority of the kite's forces, and rear lines, which are used for steering and controlling the aerodynamic lift. The control bar is typically about 45-60 cm wide, and the rear kite flying lines are connected to its ends. Through the hole located in the centre of the control bar, generally pass the front lines, or their common intermediary: the load bearing element, for example the attached element, in the form of a line, which is connected to user's harness under the control bar, while above the control bar it is attached with its upper end to the front lines, optionally intermediated by an adjustable length trimmer. The user wears the harness around the torso and uses it for connecting with the kite. The harness is generally provided with a hook, pointing downwardly with its throat opening, to hold a loop to which the attached element in the form of a suspension rope is attached at its lower end, under the control bar. The user hooks the loop onto the hook of his harness, often securing it additionally with a safety pin, which is passed through the loop and the hole in the hook, preventing uncontrolled disconnection. The pull of the kite is usually transmitted to the user in such a way that a smaller portion of the forces goes to the user's hands via the control bar and a larger portion of the forces is transmitted via an exemplary intermediary attached element in the form of a suspension rope and, subsequently, via the harness to the user's body. When the user lets the control bar go, it moves upwards along the intermediary attached element and rests on its upper thickening, resulting in all the forces then being transmitted through the attached element only. Thus, in such a case, all the lift forces of the kite are essentially transferred to the user by the intermediary attached element. When the harness is connected to the intermediate suspension rope, for example to the intermediary attached element, for example via the intermediate loop, the user is connected to the kite. Kiteboarding is often practised in extreme conditions, in very strong winds. Even in winds of 15-20 knots, kites have enough force to cause a life- or health-threatening situation.

In order to ensure safety, kiteboarding control systems are equipped with devices that release the connection between the user and the kite. They consist of a direct release mechanism, so-called "quick release", located under the control bar, near the loop or other intermediary attachment with the kite, which the user can activate with an release member to immediately disconnect himself from and aerobatics in which their limbs or other equipment may unintentionally exert a force the kite. Not all the available mechanisms work well across the spectrum of forces that can occur and regardless of environmental conditions. Furthermore, and most importantly, due to the physiognomic differences of the users, the use of the same device for a smaller person with weak forearm strength and for a larger and very strong person does not fulfil the essential role of a reliable and controlled release of the connection. In addition, professional users perform complex manouvers on the release member, which creates a substantial risk of uncontrolled and unwanted release of the connection and sudden disengagement from the kite. When moving at high speeds or performing aerobatics, the connection between the user and the kite must be reliable. Deaths and serious injuries resulting from the inability to disengage from the kite or from unwanted disengagement from the kite have been documented.

From patent specification FR2842575 (A1), there is known a snap hook comprising a stationary body with a rotatable arm which is held in a closed position by a spring. The ring positioned above the spring allows the arm to be quickly released in an emergency, by depressing its outer end in order to disengage the spring from the end of the arm. A force or load applied to the arm then causes it to open and release the kite line. Both the snap hook and ring are made of stainless steel.

From patent application FR2827657 (A1), there is known a release system suitable for a wide range of applications, in particular, for various types of attachment tips used in gliding sports. The ring is wedged by means of a force bend with a central part. The bend is itself wedged by a locking bend such that the force applied to said bend is largely decoupled from the load acted upon by the ring. The release system consists of a folded clasp with an additional locking tab having male and female self-locking straps for attaching the harness parts to the ring and line used in kitesurfing. As a variant, the self-adhesive straps can be replaced with snaps. The locking clasp buckle is equipped with a hand loop which is pulled to open the clasp and release the harness.

From utility model description DE202004004254 (U1), there is known a belt attachment system, especially for trapeze harnesses used in water sports such as windsurfing and kitesurfing, which connects a trapeze harness hook to a trapeze harness strap. The hook is hooked into an eyelet. One end of the strap is connected to the hook and the other end is connected to the eyelet. The tension of the attachment system is increased by shortening the belt system using a lever mechanism. The lever mechanism can be attached directly to the attachment system or separately.

From the description of patent application DE10313749 (A1), there is known a safety system for kitesurfing which relieves pressure on the arms during long periods of time on the water or in high wind situations. It allows deliberate release from the kite in dangerous situations. The release mechanism moves with a static friction motion.

From patent specification DE10242457 (B4), there is known a link for use in kitesurfing, consisting of a tube with a non-circular cross-section. An adjustment strap passes through it and a second strap connects it to the kitesurfer. The link passes through a guide ring mounted on the crossbar.

From patent specification EP1516810 (B1), there is known a steering device for kiteboarding which has a handlebar with two lines for connection to a kite and a trapezoid clip connected to a crossbar. The connection has a pin connected by a short line to the crossbar. The connection can be unlocked in emergency so that the short line remains connected.

From the description of patent application US2004195459 (A1), there is known a safety system for a kite that allows rotational independence of the user with respect to the control bar and the kite. This safety system also results in a stable and powerless descent of the kite when the safety system is activated.

From the description of patent application US2020130788 (A1), there is known a kite release mechanism with a release safety element by which the kite is attached to the body of a kitesurfer. The locking element detachably secures the end by which the release safety element is attached to the body. A resilient member pushes the locking element to an unlocked position so when the locking member is released, the resilient member pushes the locking element to an unlocked position, which releases the end by which the release safety element is attached, regardless of the orientation of the device, the orientation of the kite, or the strength of the kitesurfer.

From patent specification US6581879B2, there are known systems, including apparatus and methods, for controlling a motorised kite. The systems may include a kite controller with a variable line and a rotating spool bar with multiple spools or a stationary controller. Systems may also include unwind mechanisms, anti-sheet mechanisms, safety mechanisms, sheet protection mechanisms, safety triggers, line protection, etc., among others, for use with variable and/or fixed controllers.

From patent specification US6691954B1, there is known an invention relating to an integrated kite control bar and a safety device with controlled release of tension, for use in kiteboarding. More specifically, the present invention relates to an integrated kite control bar and a safety device with a controlled tension release that can be activated by a person using the kite by moving the control bar relative to the releasing safety device. A kite control bar and a release safety device comprising: a kite control bar; a centre line attached to the kite control bar and having the first end and the other end; a release safety device coupled to the first end of the centre line on the first side of the control bar; a hook coupling loop attached to the other end of the centre line on the other side of the control bar opposite to the release safety device and connected to the release safety device, the said loop being opened when the control bar is moved to the release safety device at the first end of the centre line.

From patent specification US6988694 (B2) there is known a device for disconnecting the kitesurfer from the kite which operates by pushing away the retaining element which detachably holds one end of the rope adjacent to an intermediate portion of the same rope, forming a loop released by pushing the retaining element away.

None of the kitesurfing quick release safety mechanisms known to date, i.e. mechanisms located under the control bar, within the reach of user's hand, and intended for direct and instant release of user's connection with the kite, is equipped with an adjustable mechanism for adjusting a magnitude of a release force, i.e. the force which must be applied to the active release element located under the control bar in order to release the connection. As a result of this, the user is not able to adjust the parameters of the direct release mechanism to his individual physical conditions or needs. Furthermore, none of the quick release safety mechanisms used so far in the kitesurfing control systems are provided with a attachment between the release member and the connecting member that is pivotably mounted in the body, which may result in the inability to release the connection between the elements: detachable element and attached element, in case of an unfavourable pattern of forces acting on them or in case of the penetration of frictional elements, such as sand particles, etc., into the mechanism.

In sports such as water skiing, gliding, sled racing, etc., similar speeds and forces are involved, and human health and life are also at risk. It is relatively difficult or impossible to stop the source of the aerodynamic lift or pulling force. Lack of the ability to release can result in serious negative consequences. Lack of the ability to adjust the magnitude of the release force, and therefore the risk of either being unable to release, or accidentally releasing the connection, can result in serious injury or death.

The purpose of the invention is to provide a device that allows the user to easily connect and easily and safely release the connection between two elements: detachable element and attached element. The purpose of the invention is also to enable the user to adjust a magnitude of a force which must be applied to the active release element of this device in order to release the connection between the two elements: detachable element and attached element. This function allows the device to be customised based on user's individual needs and physical conditions, and thus it allows the connection to be reliably released. This also allows to avoid undesirable release of the connection.

The invention is particularly applicable as a device which is part of a pulling kite control system, connecting the trapeze harness of the user with the lines leading to the canopy of the kite. For beginner kiteboarders and for people of low weight and low arm strength the amount of the force that must be applied to the active release element to release the connection (between the intermediary attached element and the intermediary detachable element) should be low, to prevent these users from being carried away by the wind or suffer any injury, trauma nor death. However, for expert users, and stronger and heavier people, the amount of the force needed to release the connection should be high enough to prevent accidental disengagement from the kite, for example while performing dangerous manoeuvres or aerobatics.

Another important application of the invention is a device used in activities such as horse-drawn carriages, water skiing, towing gliders, etc., that connects two load bearing ropes and is provided with a mechanism for adjusting the amount of the force which must be applied to the active release element to release their connection.

The object of the invention is a device for connecting and releasing the connection between two elements: attached element and detachable element, having a body, to which the attached element is attached, and to which the first connecting member or assembly is attached. Furthermore, a release member is movably placed directly on or in the body. In the closed position, the second connecting member, which is connected with the detachable element is releasably connected to the first connecting member. Furthermore, device contains resilient element or assembly. Movement of the active release member mounted directly on or in the body releases the connection between the connecting members. Characteristically for the invention, on/in the body and/or on/in release member and/or between the body and the release member, there is a resilient element or assembly. The object of the invention is also a device for connecting and releasing the connection between two elements: attached element and detachable element, having a body, to which the attached element is attached and to which, in the connection socket, the first connecting member is attached pivotably by means of a cylindrical connection. In the closed position, the second connecting member, which is attached to the detachable element is releasably connected to the first connecting member. Release member is mounted directly on or in the body. Characteristically for the invention, the release member is connected to the first connecting member, while the connecting and releasing pivotal movement of the first connecting member is directly caused by the action of the release member thereon and/or is caused by the action of the active second connecting member thereon.

The essence of the invention is that on/in the body and/or on/in release member or between the body and the release member, there is an adjusting element or assembly whereby the user can change magnitude of the force with which acts on the release member, in order to release the connection between the attached element and detachable element.

The essence of the invention is that release member is connected with first connecting member which is attached pivotably to the body by means of a cylindrical connection, while the connecting and releasing pivotal movement of the first connecting member is directly caused by the action of the active release member and/or by the action of the active second connecting member, allowing the user to rotate the first connecting member by the active release member and/or active second connecting member.

The essence of one option of the device according to the invention is that between the body and/or the release member and/or the first connecting member there is a resilient element or assembly and/or additional resilient element. Advantageously a resilient element or assembly is joined with an adjusting element or assembly, thereby the user can change magnitude of the force with which the resilient element or assembly acts to the release member, thereby holding it in a closed position on or in the body, i.e. in the position in which two elements: attached element and detachable element are or can be connected, via intermediary connecting members. Thus, the user adjusts the force with which he must act to the release member of this device in order to move it relative to the body to the open position in which it is possible to release the connection between the two connecting members, which releases the connection between the two elements: attached and detachable. The adjusting element or assembly may be formed by an adjusting element and/or a mobile element and/or a positioning assembly and/or an additional adjusting element in the form of locking element, adjusting knob, scale, intermediary span.

The essence of one option of the device according to the invention is that the adjusting element or assembly is in the form of a rope drum rotatably mounted on the drum pivot or clamping cleat, in another option, the rope drum is additionally provided with a pulling line. In one option, the adjusting element or assembly is formed by a set of teeth and a pawl. In other options, the adjusting element or assembly is formed by threadedly connected first and second threaded elements, wherein one of the threaded elements may be an integral thread of the body and/or an integral thread of the release member. The essence of some options is that one of the threaded members have a guide element mounted thereon or have an integrated guide element which, due to being held by the body or the release member, prevents it from rotating together with the other threaded member; the guide element may be retained by the gouge of the body or the gouge of the release member and the resilient element is a resilient rope. In another option, the adjusting element is in the form of adjusting guide and relocatable element and in other option is in the form od multi-stage socket and adjusting pin. The essence of one option is that the adjusting element or assembly is located in the body, and in another option it is also or only located in the release member. In one option, the adjusting assembly is provided with a locking element, in another option it is provided with an adjusting knob, and in yet another option, a scale is provided adjacent to the adjusting element. In a further embodiment, the adjusting assembly is provided with an intermediate element joined with a resilient element, and in a yet another embodiment, the adjusting assembly is joined with an intermediate contact element, and an adjustment allows for change of a magnitude of a friction force between the contact element and the body, causing a change of the magnitude of the force needed to move the first connecting member, to release the connection between the attached and detachable elements. In one option, the resilient element or assembly is a compressible element, in another option a tensible element, in yet another a twistable element, and in yet another a bendable element. The essence of one option of the invention is that it has a resilient assembly formed by a springy magnetic assembly formed by two magnetic elements. In another option, there is a cylinder in the body in which there is a movable piston. In many embodiment options, the first connecting member is attached to the body in the connection socket. In many options, the first connecting member is attached rotatably to the body by means of a main cylindrical connection. In some options, the first connecting member has a slant on the outer side of its contour which allows it to pivot on the main cylindrical connection via the second connecting member. In some options of the invention, the second connecting member or assembly has a slant on the outer side of its contour which allows it to pivot the first connecting member on the main cylindrical connection on the main cylindrical connection. There are possible options of the invention, wherein there is a resilient element between the first connecting member and the body. In some options, the second connecting member or assembly is in the form of a rim and the first connecting member is in the form of a uniform hook, with an isolated catching element, in other options the first connecting member is formed by an assembly comprising an connecting member base and an connecting member element which may be connected by a cylindrical connection and may be connected by a resilient element. In some options, the release member is connected to the first connecting member and it may be a connection by means of the first link moving in the guide grooves of the body or the release member, it may also be a connection by means of an intermediary element which may be in the form of a push rod or a release tie or an assembly thereof connected by means of the second link. There are options of the invention, wherein the rotational movement of the first connecting member, attached to the body in the connection socket by means of the main cylindrical connection, is caused by the force acting on the release member connected thereto or by the second connecting member or assembly acting thereon. In one option of the invention, the body is divided into two parts. There is an option where the release member is divided into two parts. In many options, the release member is the release rim. There are options where the attached element is fastened to the body by means of a fixed fastener, and there are also options where this is done via a rotary link, as well as via a swivel. In some options, the attached element and/or the detachable element are placed in outer tubes. In some options there is a channel in the body for the safety line. There are options of the invention where the attached element is a suspension rope connected by its other end to a motor boat, a glider winch, or a pull kite, for example a kitesurfing kite, in a plurality of options via lines. In some options, the detachable element is attached to the body with its other end forming a loop and there are possible options that a safety pin is attached near the loop.

An advantageous consequence of the use of the invention is that it is possible to adjust the magnitude of the force that the user must apply to change the position of the release member in order to release the connection between the attached element and detachable element. This makes it possible to adapt the device to the physical conditions and needs of the individual user, ensuring that the release function is carried out reliably and that the connection is protected against accidental opening.

Another advantageous effect is that the connection between the elements (3 and 8) can be released each time, independently of the forces acting on the elements: attached and detachable or independently of external elements such as sand, thanks to the connection between the release member and the first connecting member which forces the connection between the two elements: attached and detachable to be released.

A further advantageous effect is the possibility to connect the element attached and detachable unattended, by connecting the connecting members without the need to activate the active release element, which is performed by latching.

Another advantageous effect is the ability to rotate the attached element relative to the body of the device, useful in situations where the fixed element needs to be unscrewed, for example when the kite flying lines have become twisted due to rotation of the kitesurfer relative to the kite or vice versa. Another advantageous effect is that an additional safety line can be routed through the inner channel of the body, which makes it possible, for example, to remain attached to the kite, keeping it in a safe fly, when the connection of the trapeze harness of the user from the kite flying lines is released.

Another advantageous effect is that the release member can be grasped with the whole hand, due to the fact that it has the form of a release rim. This allows the user's gripping efficiency to be increased and hence to be displaced to release the elements: attached and detachable.

A further advantageous effect is that the components of the device can be easily assembled, due to the fact that the body and/or the release member are divided into two parts: first and second or front and rear.

The subject of the invention is shown in the exemplary embodiments in the drawing, in which the individual figures represent:

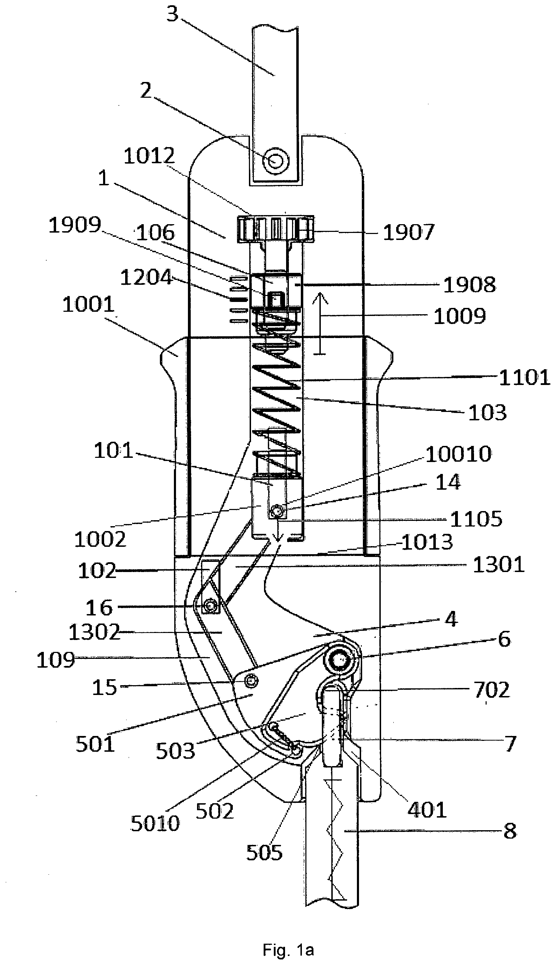

fig. 1a - cross-section of the device in the first embodiment in the closed position,

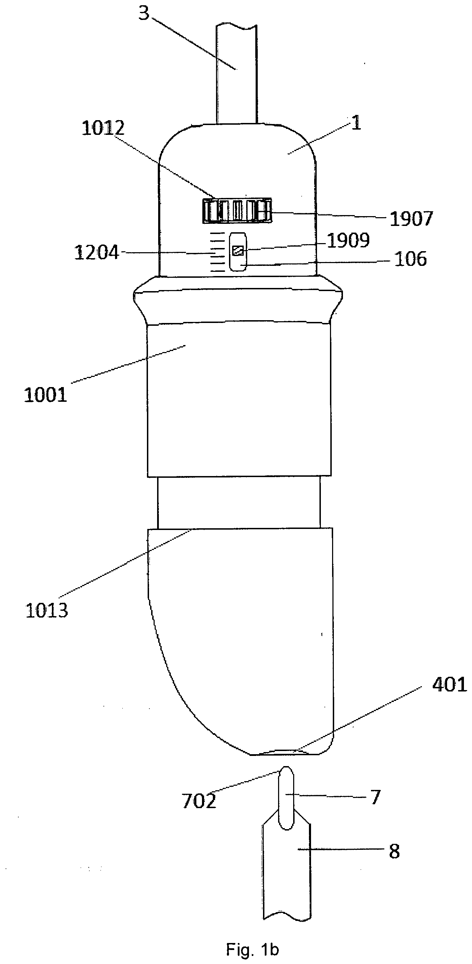

fig. 1b - front view of the device in the first embodiment in the open position,

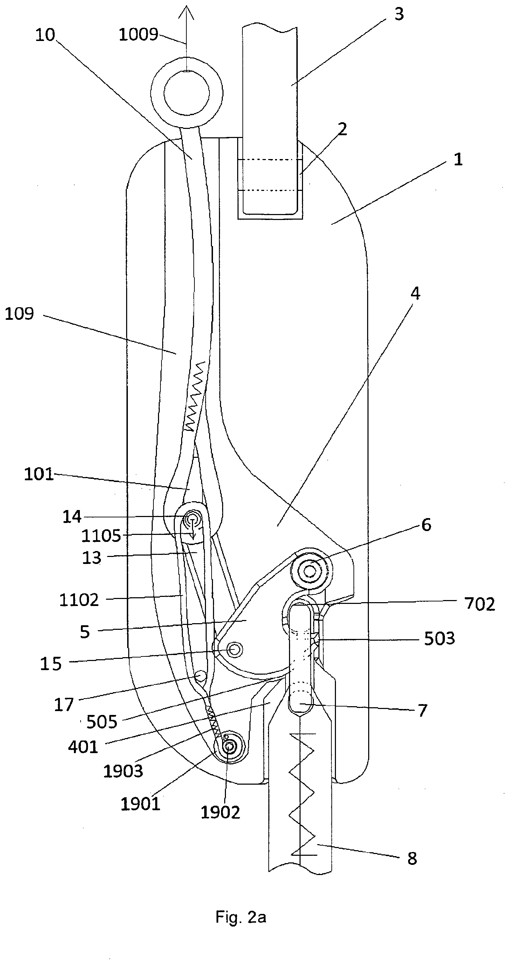

fig. 2a - cross-section of the device in the second embodiment in the closed position,

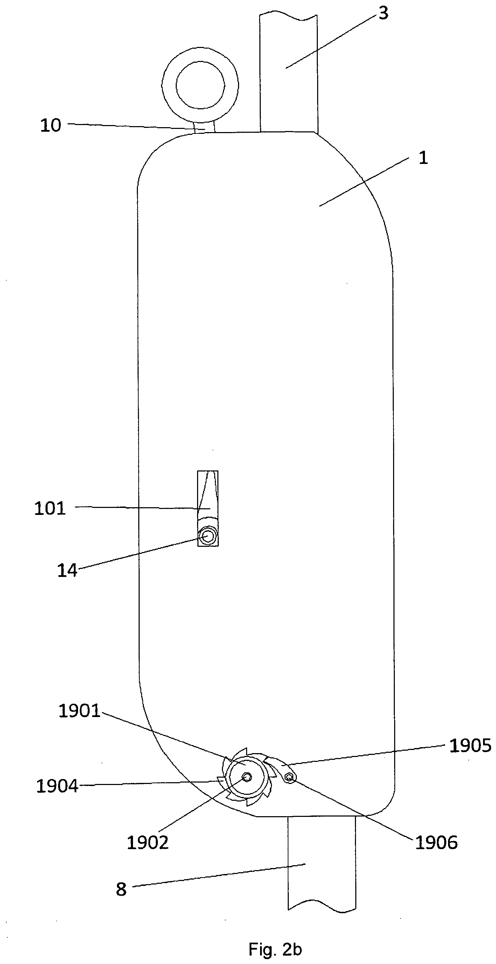

fig. 2b - front view of the device in the second embodiment in the closed position,

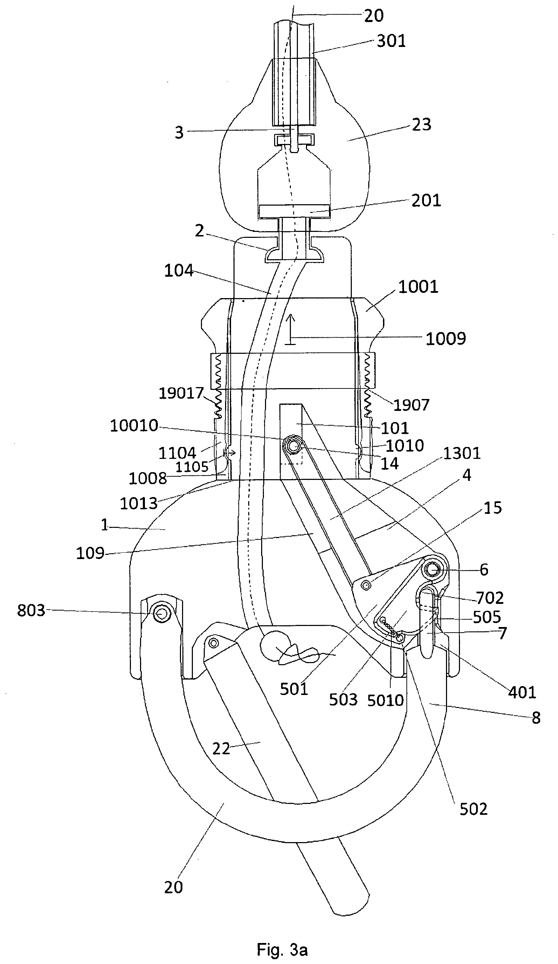

fig. 3a - cross-section of the device in the third embodiment in the closed position,

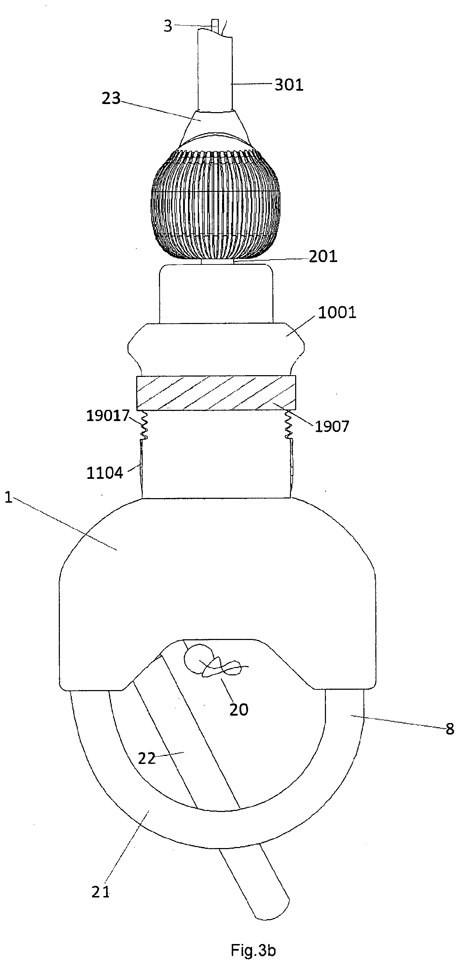

fig. 3b - front view of the device in the third embodiment in the closed position,

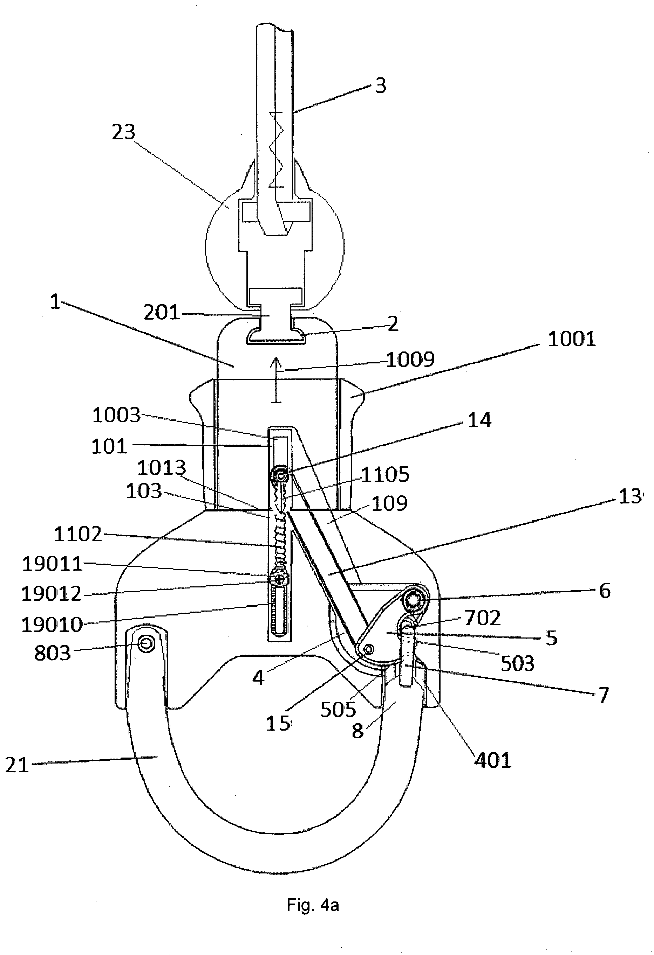

fig. 4a - cross-section of the device in the fourth embodiment in the closed position,

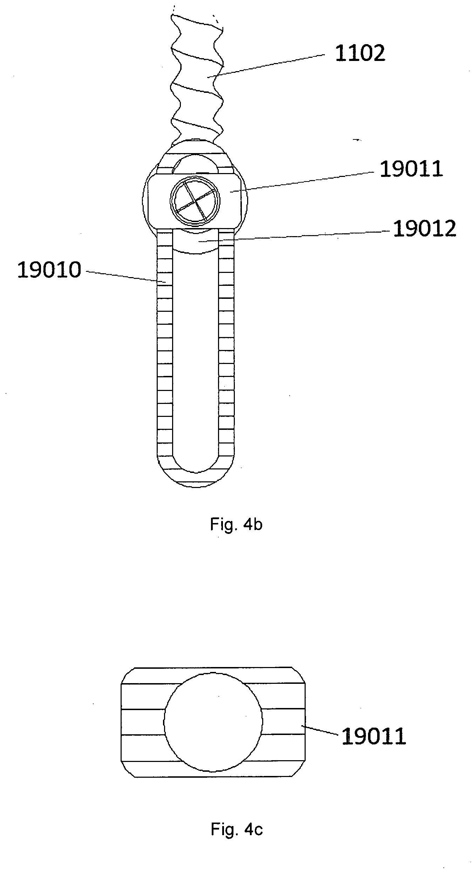

fig. 4b - cross-section of selected components in the fourth embodiment,
fig. 4c - rear view of selected components in the fourth embodiment,

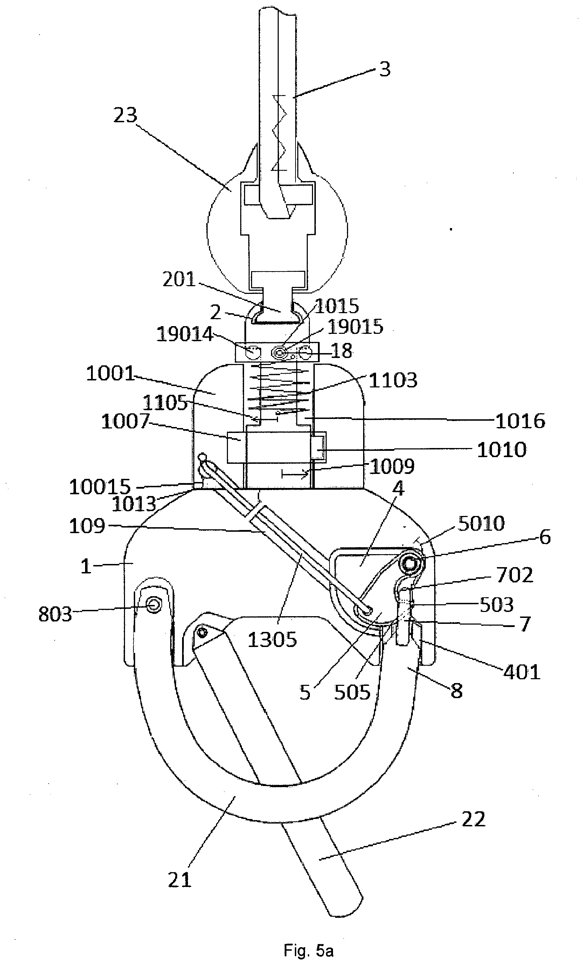

fig. 5a - cross-section of the device in the fifth embodiment in the closed position,

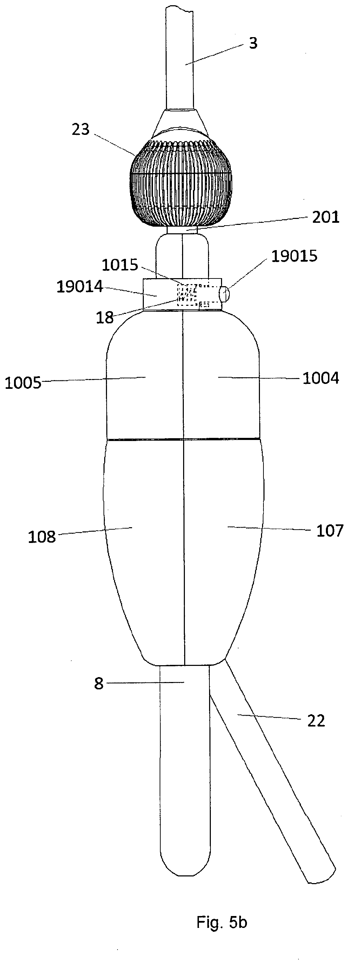

fig. 5b - side view of the device in the fifth embodiment in the closed position,

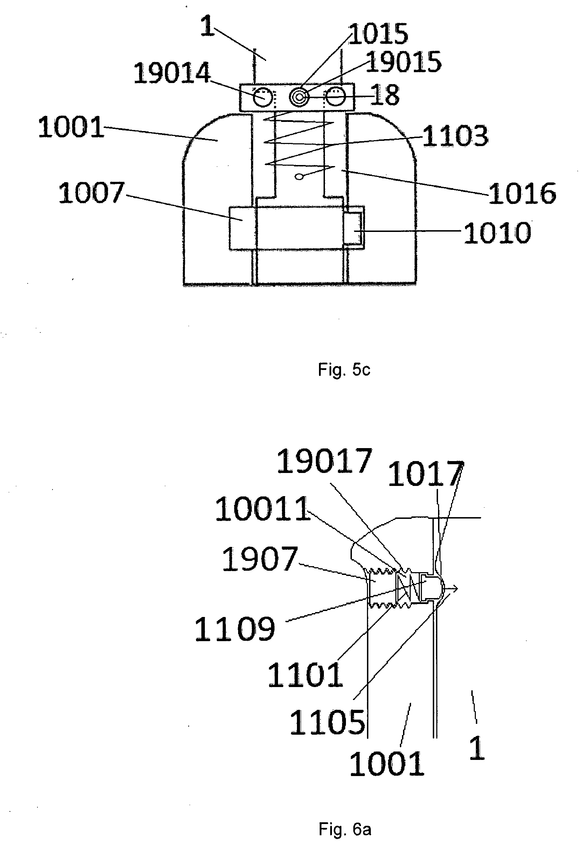

fig. 5c - cross-section of selected components in the fifth embodiment,
fig. 6a - cross-section of selected components in the sixth embodiment,

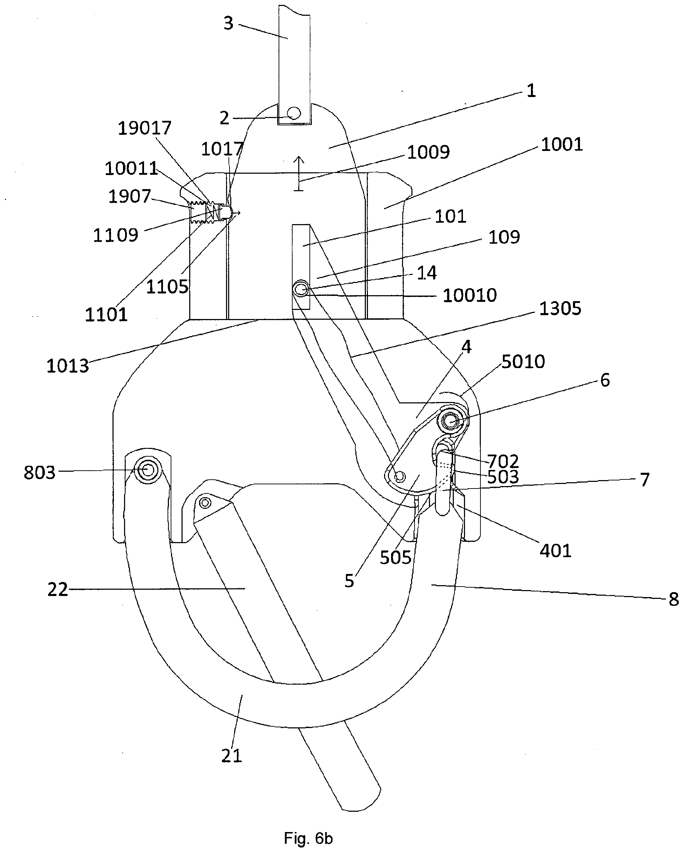

fig. 6b - cross-section of the device in the sixth embodiment in the closed position,

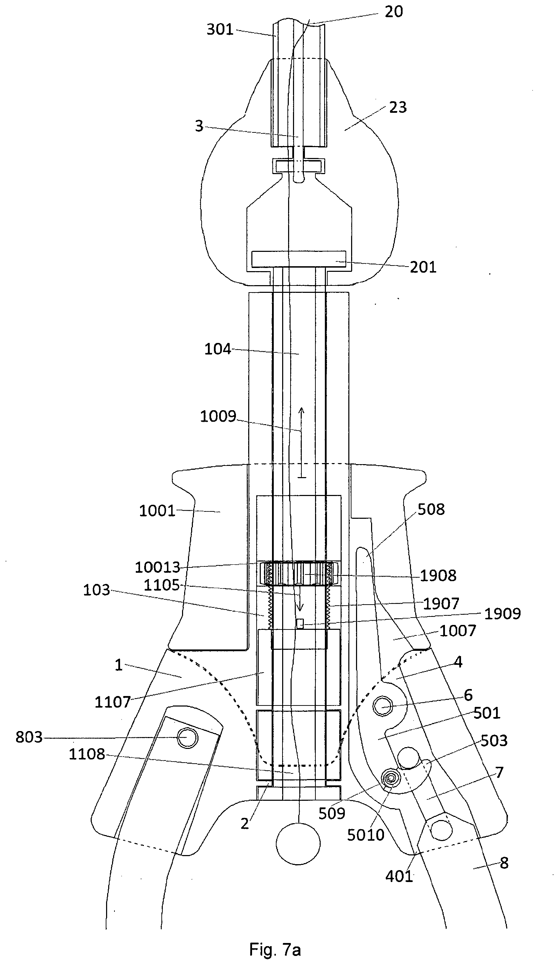

fig. 7a - cross-section of the device in the seventh embodiment in the closed position,

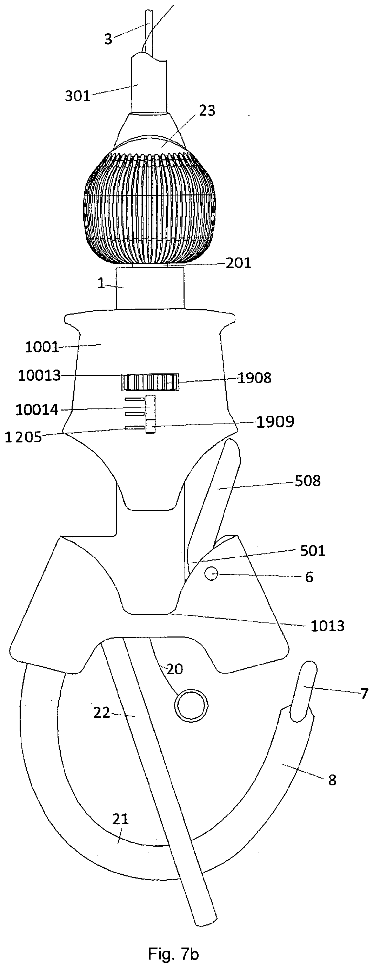

fig. 7b - front view of the device in the seventh embodiment in the open position,

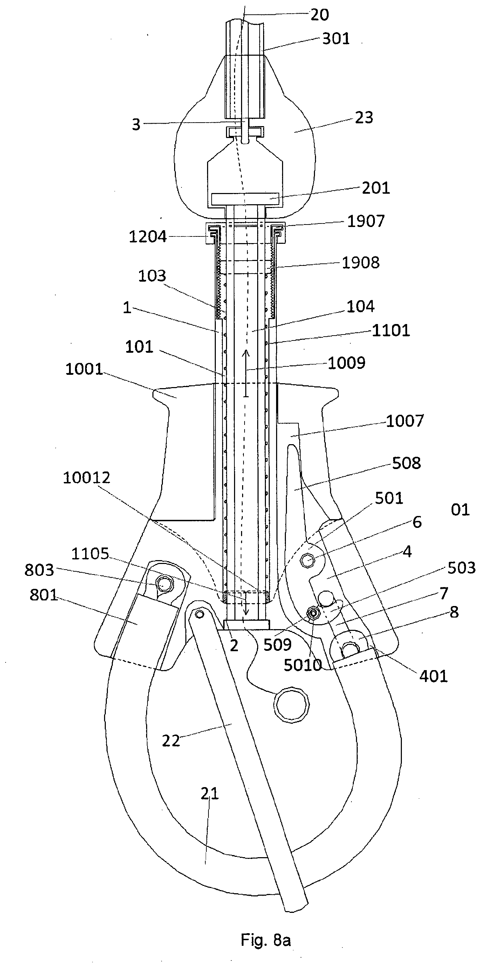

fig. 8a - cross-section of the device in the eighth embodiment in the closed position,

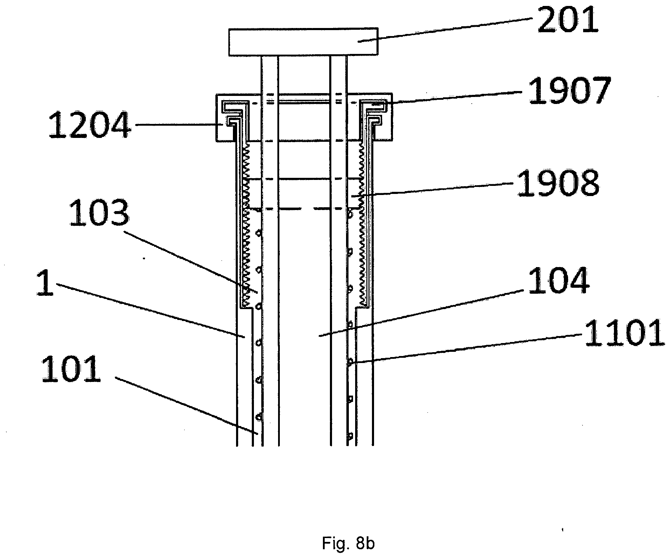

fig. 8b - cross-section of selected components in the eighth embodiment,

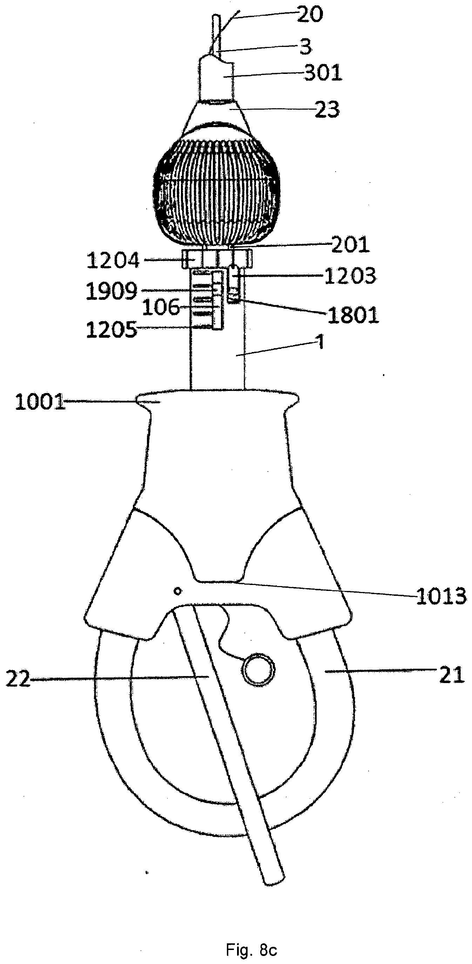

fig. 8c - front view of the device in the eighth embodiment in the closed position,

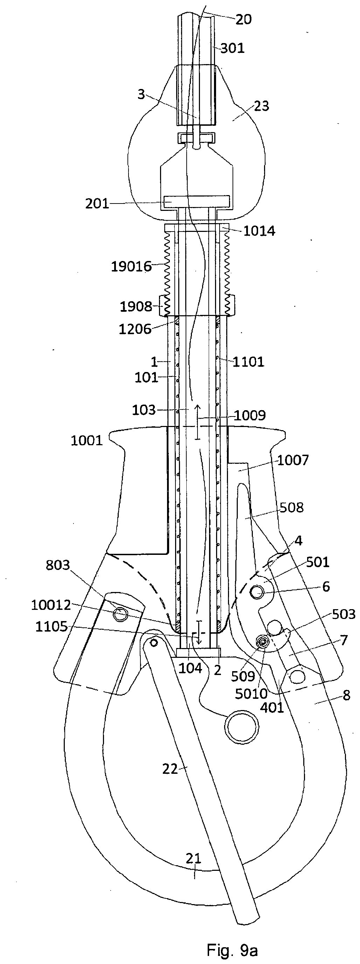

fig. 9a - cross-section of the device in the ninth embodiment in the closed position,

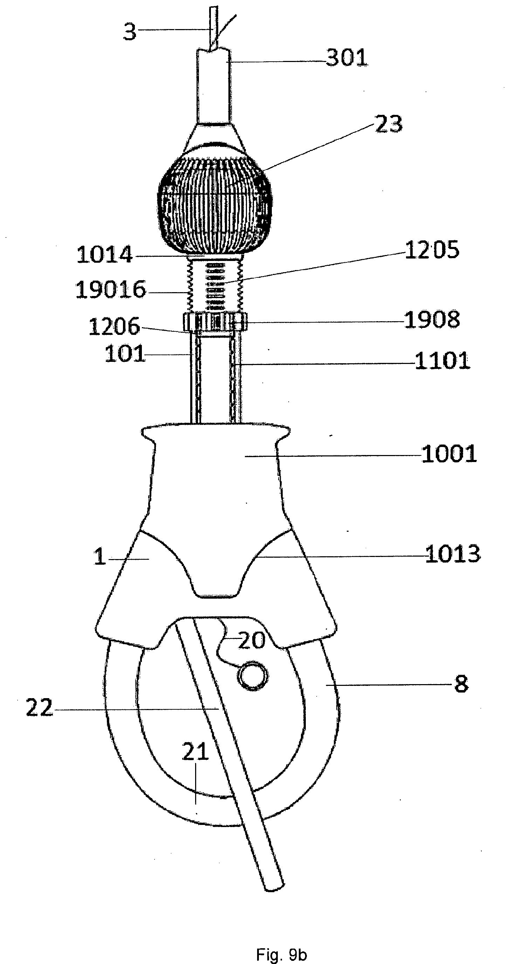

fig. 9b - front view of the device in the ninth embodiment in closed position,

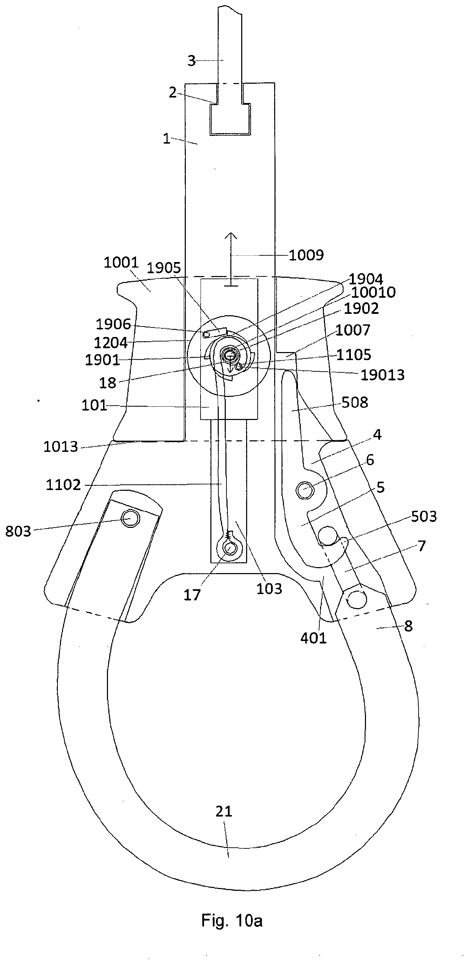

fig. 10a - cross-section of the device in the tenth embodiment in the closed position,

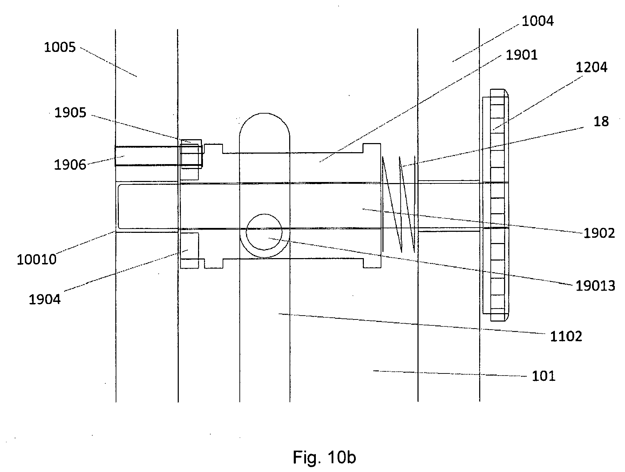

fig. 10b - cross-section of selected components in the tenth embodiment,

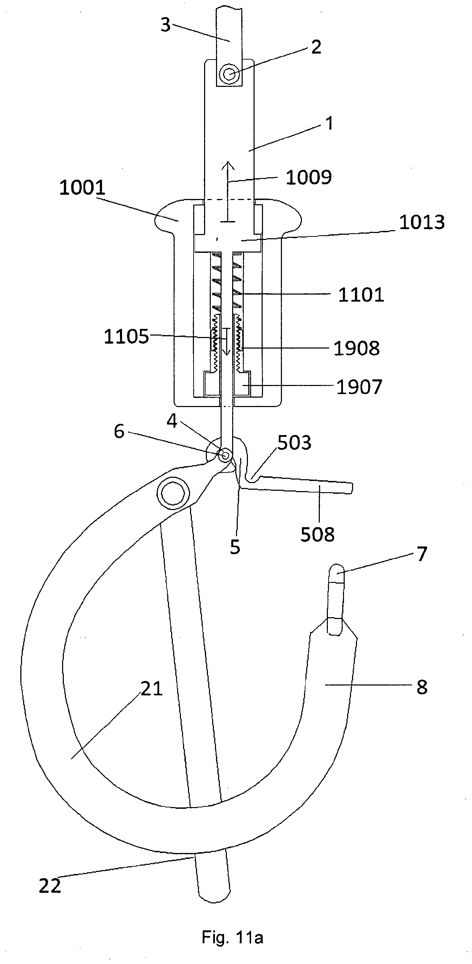

fig. 11a - cross-section of the device in the eleventh embodiment in the closed position,

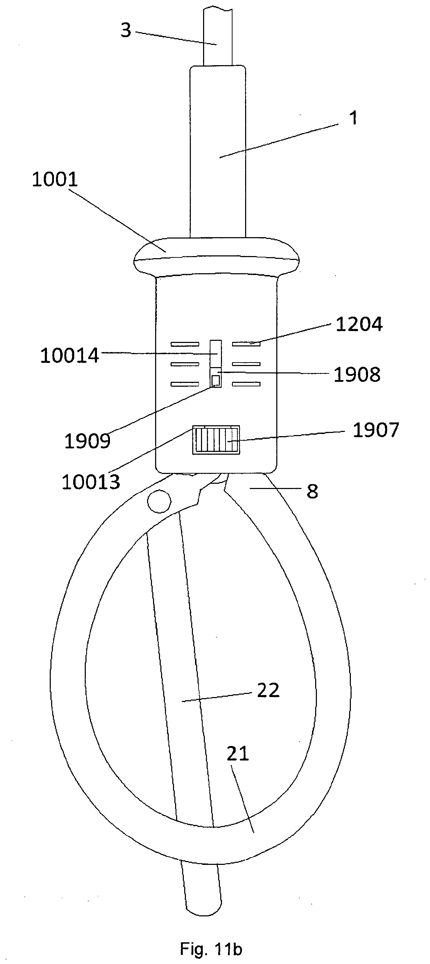

fig. 11b - front view of the device in the eleventh embodiment in the closed position,

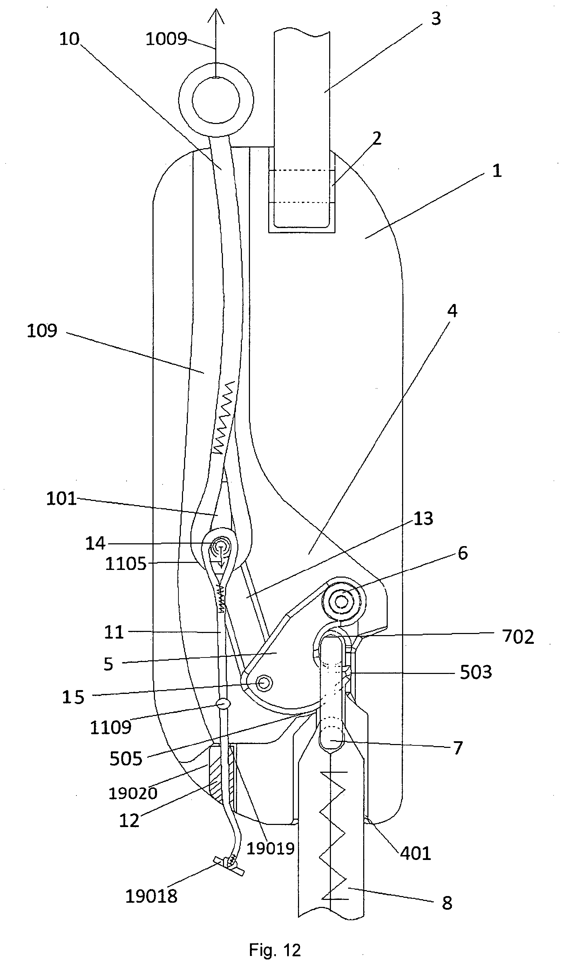

fig. 12 - cross-section of the device in the twelfth embodiment in both versions, in the closed position,

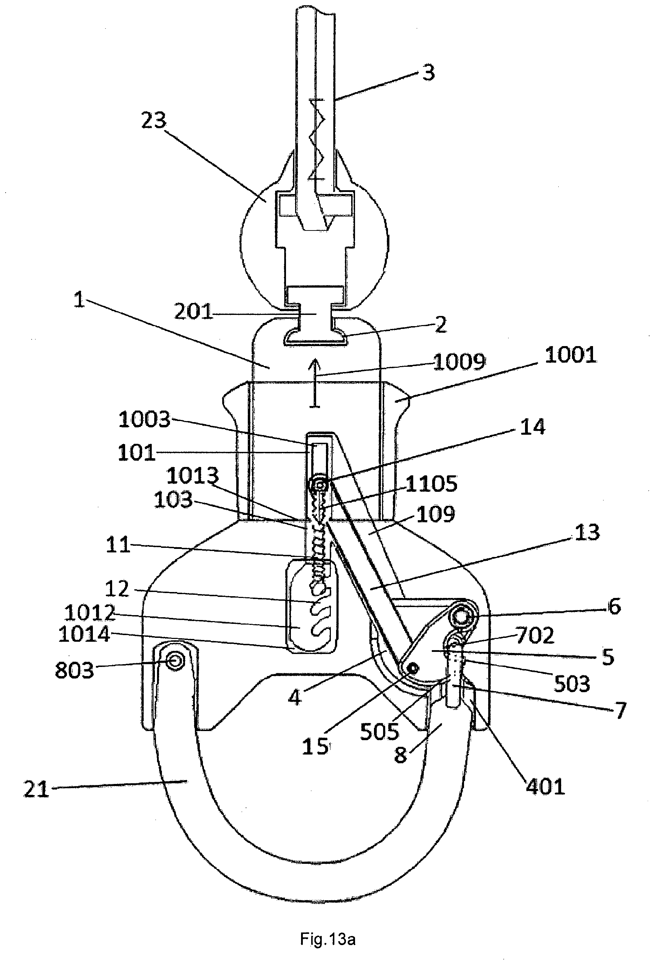

fig. 13a - section of the device in the thirteenth embodiment in the first variant, in the closed position,

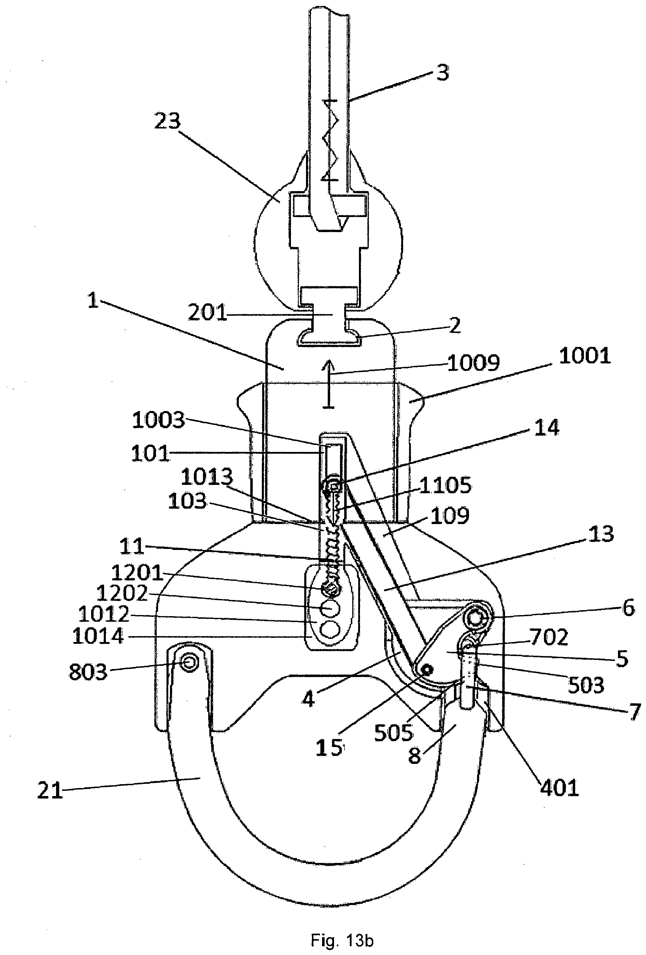

fig. 13b - cross-section of the device in the thirteenth embodiment in the second variant, in the closed position,

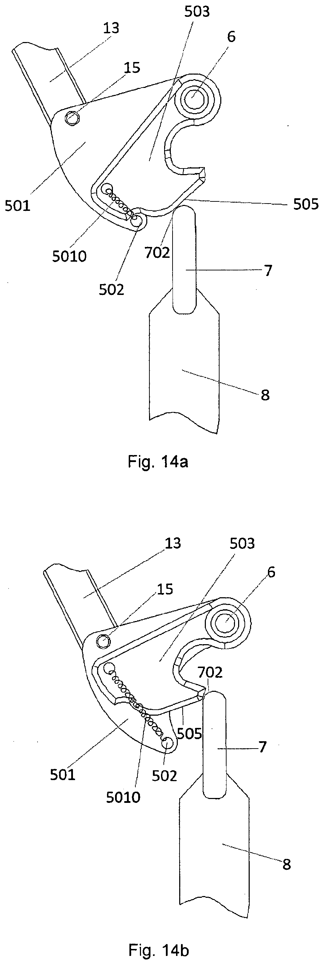

fig. 14a - front view of selected elements in the first and third embodiment, in the position of unconnected connecting members,
fig. 14b - front view of selected elements in the first and third embodiment, in the position when connecting the connecting members,

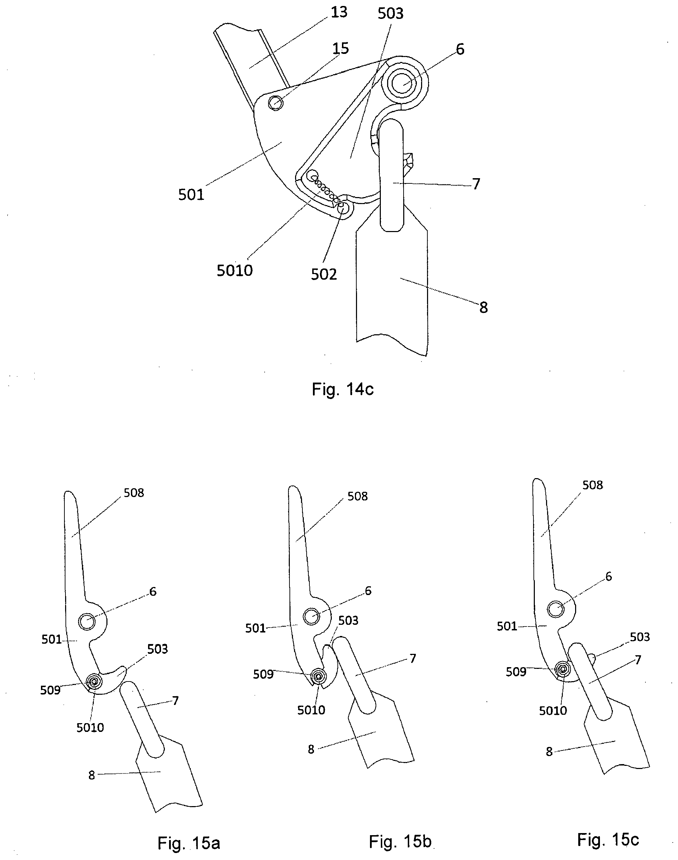

fig. 14c - front view of selected elements in the first and third embodiments, in the position of the connected connecting members.
fig. 15a - front view of selected elements in the seventh, eighth and ninth embodiment, in the position of unconnected connecting members.
fig. 15b - front view of selected elements in the seventh, eighth and ninth embodiment, in the position when connecting the connecting members,
fig. 15c - front view of selected elements in the seventh, eighth and ninth exemplary embodiments, in the position of the connected connecting members.

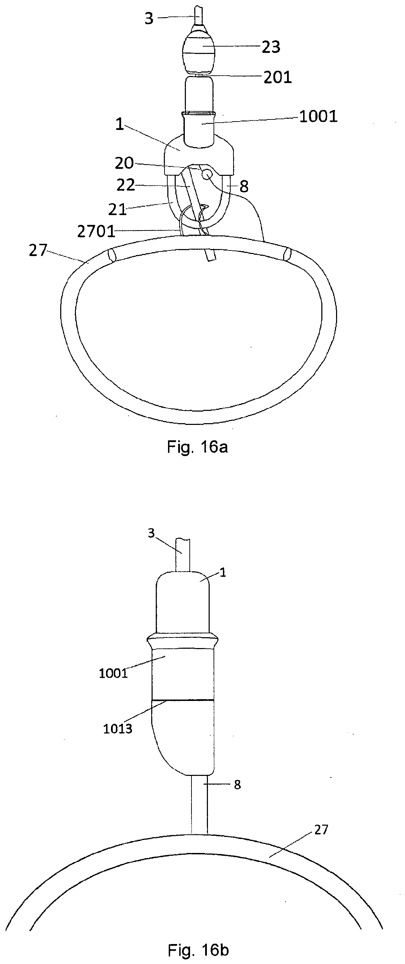

fig. 16a - overview of selected elements which may be present in the third, fourth, fifth, sixth, seventh, eighth, ninth, tenth, eleventh and thirteenth embodiment,
fig. 16b - overview of selected elements which may be present in the first, second and twelfth embodiment,
fig. 17 - overview of selected elements which may be present in all of the embodiments.

The object of the invention **in the first embodiment** shows a universal device, also applicable for kitesurfing, as well as for water skiing, which connects two load bearing ropes and has a latching function and a safety quick release, with a mechanism adjusting the release force. It consists of an elongated body 1, with a quadrilateral cross-section, on the upper part of which there is a fixed fastener 2 in the form of a sleeve with a clamping screw, which fastens to the body 1 the attached element 3 in the form of a threaded and stitched suspension rope, connected, for example, to a kitesurfing pulling kite 24 or to a motorboat. A circumferential thickening 1013 runs across the central part of the body 1, on its outer side. On the upper part of the body 1, there is a sliding releasing element in the form of a releasing rim 1001 in the form of a plastic handle with a thickening in the upper part and a longitudinal through hole of a quadrilateral crossection, which enables sliding on the upper part of the body 1. There are mounting holes 10010 in the middle of the lower parts of the back and the front wall of the release rim 1001. The user may apply a lifting force with an upward vector 1009 to the active release rim 1001. Inside the body 1, on its lower left side, there is a recess 109. Inside the central part of the body 1, there is a cylinder 103, in the lower part of which, in the middle, there are longitudinal through guide grooves 101 with the outline of rectangles situated on the front and rear side of the body 1, through which the first link 14 passes perpendicularly, in the form of a cylindrical connection placed by its ends in the mounting holes 10010 of the release rim 1001. In the cylinder 103, there is an intermediary element in the form of a piston 1002, connected to the release rim 1001 by the first link 14. The intermediary element in the form of the first push rod 1301 located in the recess 109 is connected by its rotating end to the release rim 1001, by the first link 14. The push rod 1301 is rotatably attached by its second end to the first end of the second push rod 1302 by a third link 16 in the form of a cylindrical connection. The third link 16 is slidably inserted into the second guide grooves 102 located on the front and rear side of the body 1 and having an orientation parallel to the axis of the cylinder 103. The second push rod 1302 is rotatably attached at its other end, by a second link 15, in the form of a cylindrical connection to the assembly forming the first connecting member, in the form of a base 501 in the shape of a flat metal three-way plate and a catching element 503 in the form of a metal hook with a throat opening on the right side and an outer slant 505 in the lower part. The base 501 is connected by its lateral corner to the second link 15, it has a protruding pin 502 on its lower corner and is attached by its upper corner, pivotably by a main cylindrical connection 6 in the form of a metal cylinder, to the body 1, in the connection socket 4 which has the form of a chamber located in the lower part of the body 1. The connection socket 4 has an elongated inlet hole 401 at its base. Also rotatably mounted on the main cylindrical connection 6 is the catching element 503 which is connected to the base 501 by a resilient element 5010, in the form of a metal tension spring and has a recess in its lower part with which it rests on the pin 502. The second connecting member 7, in the form of a steel rim, is coupled to the catching element 503 in the closed position. The second connecting member 7 has an outer slant 702 in the upper part. A detachable element 8 is attached with its end at the second connecting member 7, which has the form of a suspension rope leading, for example, to the kitesurfer's trapeze harness 27 or to the tow bar which the water skier holds in his hands. Between the piston 1002 and the upper bottom of the cylinder 103, there is a compressible resilient element 1101 in the form of a compression metal spring which can exert a resilient force with a downward vector 1105, by pressing the release rim 1001 the circumferential thickening 1013 of the body 1 via the piston 1002 and the first link 14. Then between the body 1 and the compressible element 1101, there is an adjusting assembly, consisting of threadedly connected elements: an adjusting mobile element in the form of a second threaded element 1908, in the form of a metal nut, with a guide element 1909 integrated into it and projecting outwards, and a positioning adjusting member in the form of a first threaded member 1907, in the form of an adjusting screw, rotatably mounted with its knurled head in a through adjustment hole 1012 in the upper part of the body 1. The first end of the compressible element 1101 is supported the end of the nut 1908. In the middle part of the body 1, along the cylinder 103, there is a gouge 106 in which there is a guide element 1909 and along which there is a scale 1204 on the outer wall of the body 1. The operation of the device **in the first embodiment** consists in that the release member in the form of a release rim 1001, as a result of a pressing force with a downward vector 1105, coming from the resilient compressible element 1101 and transmitted through the connection by the intermediate piston 1002 and the first link 14, is held on the body 1 in a closed position, i.e. in such a position that it is pressed downwardly against the circumferential thickening 1013 of the body 1. In the closed position, the resilient pressing force with the downward vector 1105 also restrains the first connecting member assembly 501, 503 and 5010, through the assembly of intermediate push rods 1301 and 1302, counteracting the rotation of the first connecting member assembly 501, 503 and 5010 to the right (clockwise) on the main cylindrical connection 6. In the closed position, the catching element 503 locks the inlet 401 in the connection socket 4 with its right catching part. In order to connect the elements 3 and 8, by fastening the detachable element 8 in the body 1, the user, acting with force, slides the active second connecting member or assembly 7 of the detachable element 8 into the inlet hole 401 in the body, turning the catching element 503 on the main cylindrical connection 6 to the right, due to the favourable angle of attack obtained by the outer slants 505 and 702 of connecting members 5 and 7, which tightens the resilient element 5010. When the second connecting member or assembly 7 is inserted into the end of the connection socket 4, the resilient force of the resilient element 5010 acting on the catching element 503 rotates it counterclockwise back into the closed position, coupling it to the second connecting member or assembly 7, thus locking it into the body 1. In order to release the connection of the elements 3 and 8, releasing the detachable element 8 from the body 1, for example in an emergency situation, the user acts to the active release rim 1001 with a sufficient force with the upward vector 1009, to overcome the resilient force with the downward vector 1105, coming from the compressible element 1101, and to lift the release rim 1001 together with the first link 14, which is lifted along the first guide grooves 101. Through the connection with the first link 14 the piston 1002 is also lifted and moves in the cylinder 103 additionally tensioning the compression spring 1101. By connecting to the first link 14 the push rod 1301, is also lifted which results in an upward movement of the third link 16, which moves in the second guide grooves 102, lifting the second push rod 1302, which by means of the second link 15 lifts the left corner of the base 501, which thus pivots to the right on the main cylindrical connection 6 in the connection socket 4. The base 501, by means of a protruding pin 502, pulls the catching element 503 resting against it in such a way that it, too, rotates clockwise on the main cylindrical connection 6, which has the effect of uncoupling the first connecting member 5 from the second connecting member 7 and releasing the connection. When the user releases the release rim 1001, the resilient force with the downward vector 1105, coming from the compression spring 1101 pushes the piston 1002 back down, moving it along the cylinder 103 to its initial position, at the same time moving the first link 14 and the release rim 1001 back down, which results in the push rod assembly 1301 and 1302, connected through the third link 16 moving along the second guide groove 102, which due to the connection through the second link 15 results in a counterclockwise rotation at the main cylindrical connection 6 of the base 501 and its return to the initial position where it holds the catching element 503 in the closed position through their connection by the resilient element 5010 In order to adjust a magnitude of a release force, the user, by means of an adjusting device formed by the elements 1907, 1908 and 1909, by setting the initial value of the resilient force that comes from the compressible element 1101, with a downward vector 1105, and forcing the release rim 1001 downwards against the thickening 1013 of the body, sets the value of the minimum force 1009 with the opposite upward vector with which the user must act on the release rim 1001 in order to release the connection between the second connecting member 7 and the first connecting member assembly 5, causing the detachable element 8 to be disengaged from the body 1. This is achieved in such a way that by turning the knurled head of the adjusting positioning element in the form of the first threaded element 1907, which is rotatably mounted in the adjusting hole 1012 of the body 1, the user, thanks to a threaded movable connection, moves the connected mobile adjusting element in the form of the second threaded element 1908, in the form of a nut, upwards or downwards. This is due to an integrated guide element 1909, placed inside the longitudinal gouge 106, so that the second threaded element 1908 does not rotate with the first threaded element 1907, but instead slides along its thread. The rotational movement of the element 1907 thus forces the progressive movement of the element 1908 caused by their threaded connection and by the guide element 1909 being held by the walls of the gouge 106 of the body 1. The downward movement of the second threaded element 1908 in the form of a nut, through the clockwise rotation of the head of the first threaded element 1907, connected with it threadedly, in the form of a bolt, brings together the ends of the compressible element 1101, in the form of a spring, increasing its initial tension, which results in the need for the user to apply a greater force 1009 with an upward vector with which he must act on the release rim 1001 in order to release the connection between the second connecting member 7 and the first connecting member assembly 5. Moving the second threaded element 1908 upwards by turning the first threaded element 1907 to the left distances the ends of the spring from each other 1101, causing the opposite effect. The scale 1205 on the outside of rim the body 1, shows, through a gouge 106, the current position of the mobile adjusting element in the form of a second threaded element 1908, and thus the current setting of the release mechanism.

The object of the invention **in the second embodiment** shows a universal device, also applicable for kitesurfing as well as for water skiing, horse sledding or gliding, connecting two suspension ropes, having a latching function and a safety quick release with a release force adjustment mechanism. It consists of an elongated body 1, the upper part of which has a fixed fastener 2 in the form of a pin embedded in the body 1, to which an attached element 3 is attached in the form of a section of the first suspension rope, for example, leading to a pulling kitesurfing kite 24, or a motorboat, or a glider winch, or a sled animal. Inside the body 1, in its lower right part, there is a connection socket 4 in the form of a chamber, and in its lower, central and upper parts there is a longitudinal vertical recess 109, in the vertical axis of which, on the front and rear wall of the body 1, there are through guide grooves 101 with a rectangular outline. The body 1 movably incorporates an release member 10 in the form of a cord whose first curled and stitched end is engaged with the first link 14 in the form of a cylindrical connection whose ends are seated in guide grooves 101. The other end of the release member 10 in the form of a cord is located above the upper surface of the body 1 and a handle is attached to it. The user may apply a force 1009 with an upward vector to the release member 10. Also rotatably attached to the first link 14, inside the space in the body 1 formed by the combined chambers of the connection socket 4 and the recess 109, in the form of a metal push rod, the second end of which, by means of a second link 15 is rotatably mounted to the left side of the first connecting member 5, which is in the form of a metal hook with a throat opening on the right side, a catching element 503 on the right side and a slant 505 in the outer lower part of the contour. In the connection socket 4 the first connecting member 5 is rotatably attached to the body 1 with its upper part through a main cylindrical connection 6 in the form of a metal cylinder. At the bottom of the connection socket 4, there is an inlet hole 401, into which the user can insert an active second connecting member or assembly 7. The active second connecting member or assembly 7 is in the form of a metal hoop with an outer slant 702 in the upper part. The second connecting member or assembly 7 is attached to the end of a detachable element 8 in the form of a threaded and stitched section of a second suspension rope, which leads, for example, to the trapeze harness 27 of a kitesurfer, to a towing bar held in the hands of a water skier, or to a glider, or to a coupled vehicle. Between the release member 10 and the body 1, there is a resilient tensible element 1102, which acts on the release member 10, via the first link 14, by means of a resilient force with a downward vector 1105. The element 1102 is in the form of a resilient rope wrapped in loops in such a way that its ends are sewn together and at the end form a connected section of the rope, which section is a pulling line 1903 attached to an adjusting assembly formed by an mobile adjusting assembly in the form of a rope drum 1901, fixed rotatably to the lower part of the body 1, by means of the drum pivot 1902, in the form of a cylinder and an adjusting positioning assembly in the form of a pawl 1905 and a set of teeth 1904. The part of the rope drum 1901 on which the pulling line 1903 is wound is located in the inner chamber of the recess 109 of the body 1 and the outer part protrudes beyond the outer contour of the body 1, remaining within the reach of the user's hand. On the outer side of the rope drum 1901, there is a set of teeth 1904, which are trihedral in shape with their bases adjacent to the outer circumference of the drum 1901, the left-hand arms having a gentle curve and vertical right-hand arms. To the right of the rope drum 1901, on the outside of the body 1, there is an adjustment positioning unit in the form of a pawl 1905, in the form of a plastic arm which, with its right end, is rotatably attached to the body 1 by means of a rotating pawl fastener 1906 in the form of a cylinder and which, with its left free end, pushes against the vertical arms of the set of teeth 1904. The resilient tensible element 1102 in the form of a loop of a resilient rope is attached to the first link 14 in the form of a cylindrical connection and to a transverse pin 17 being a part of the body 1, located in its lower part. The tensible element 1102 is hooked onto the rope drum 1901 with its stitched end acting as a pulling line 1903. The elements 1901,1902,1903,1904 and 1905 form an adjusting assembly. The operation of the device **in the second embodiment** is based on the fact that the active releasing member 10, as a result of an pulling force with a downward vector 1105, coming from the resilient tensible element 1102, and transmitted through the connection via the intermediate first link 14 is held on the body 1 in a closed position, i.e. in which it is moved downwards and the first link 14 rests on the bottom of the guide grooves 101. In the closed position, the pulling force with a downward vector 1105 also restrains the first connecting member 5, via the intermediary member 13 in the form of the push rod, connected to the tensible element 1102, the first link 14 and the member 10, which prevents the first connecting member 5 from rotating clockwise at the main cylindrical connection 6. In the closed position the first connecting member 5 locks the inlet 401 in the body 1 with its lower catching part which constitutes the catching element 503. In order to join the elements 3 and 8, by clipping the detachable element 8 in the body 1, the user, acting with an upward vector force inserts the active second connecting member or assembly 7 of the detachable element 8 into an inlet hole 401 in the connection socket 4 in the body 1 by rotating clockwise the first connecting member 5 on the main cylindrical connection 6, due to the favourable angle of attack obtained by the slants 505 and 702 in the outer contours of the connecting members 5 and 7. The first connecting member 5 lifts the first link 14 by means of a rotating connection to the push rod 1301 and by means of a second link 15 moves the first link upwards in the guide grooves 101, at the same time tensioning the resilient tensible element 1102 in the form of a hoop made of resilient rope. When the second connecting member or assembly 7 is inserted into the end of the hole in the connection socket 4, the resilient force with a downward vector 1105, coming from element 1102, acts on the first link 14, pulling it downwards, together with the push rod 1301, through engagement through the second link 15, rotates the first connecting member 5 on the main cylindrical connection 6 to the left and, through the catching element 503, couples it to the second connecting member or assembly 7, thus snapping it in the body 1. In order to release the connection of the elements 3 and 8, releasing the detachable element 8 from the body 1, for example, in an emergency situation, the user acts on the release member 10, with a sufficiently large force 1009 with an upward vector, to lift it together with the first link 14, overcoming the resilient force with the downward vector 1105, coming from the element 1102. By lifting the release member 10, the user simultaneously lifts the first link 101, in the guide grooves 14, which raises the push rod 1301, which, through the second link 15, lifts the left side of the first connecting member 5, thus rotating it on the main cylindrical connection 6 to the right to the open position and disengaging the connecting members 5 and 7 from the connection, thereby releasing the connection between the detachable element 8 and the body 1. When the user releases the release member 10, the resilient force with the downward vector 1105, coming from the element 1102, pulls the release member 10 together with the first link 14 and the push rod 13, downwards, at the same time rotating the first connecting member 5 to the left to its initial position, i.e. closed. In order to change the setting of a mechanism adjusting a magnitude of the release force, the user, by means of elements of the adjusting assembly 1901, 1902, 1903, 1904 and 1905 by means of a unidirectional rotational counterclockwise movement of the mobile adjusting assembly in the form of a rope drum 1901, due to its rotational connection to the body 1, by means of the drum pivot 1902, winds on it the pulling line 1903, in the form of a stitched resilient rope segment and thus pre-tensions the connected resilient tensible element 1102, in the form of a further spring-loaded rope segment, thus setting the resilient force with the downward vector 1105 with which the downward-releasing member is pulled 10. It thus sets the force 1009 with upward vector that must act on the release member 10 to release the connection. Due to the positioning adjusting assembly formed by the set of teeth 1904 placed on the drum 1901 and the pawl 1905, the resilient rope 1102 cannot unwind from the rope drum 1901, because the movement to the right is impossible due to the pressure of the pawl 1905 on the vertical right arms of the teeth 1904. The movement to the left is possible as the gentle left tooth arms lift the pawl 1905 mounted rotatably to the body 1 on the pawl fastener 1906. Release of tension on the resilient rope 1102 is possible by manually turning the pawl 1905 and releasing its pressure on the set of teeth 1904, allowing the rope drum 1901 to rotate freely in the opposite direction, i.e. to the right in this example.

The object of the invention **in the third embodiment** represents a device which is part of a control system for a pulling kitesurfing kite 24, having a safety quick release equipped with a release force adjustment mechanism as well as latching and counter-rotation functions. It consists of a body 1, in the form of a plastic element, rectangular in cross-section in its upper longitudinal part, which has a horizontal circumferential widening 1013 at half its height and widens at the bottom, terminating in a bifurcation at its base. A channel 104, bent to the left, runs along the entire length of the body, ending in an outlet at the bottom, and in the upper part of the body 1, it enters the hole of the fixed fastener 2 in the form of an upward opening, with a narrowing at the top, to which, by means of a rotary link 201 and a swivel 23, an attached element 3 is fastened in the form of a suspension rope leading to the front lines 2501 of the kite 24. The rotary link 201 is a metal sleeve with widenings at the base and at the top. The swivel 23 is in the form of a plastic sphere with an outer longitudinal corrugation and a shaped piece in the upper part. The rotary link 201 is attached rotatably in the fixed fastener 2 with its rounded lower widening, and with its rectangular upper widening, it is glued permanently from the bottom into the interior of the swivel 23, to which an attached element 3, in the form of a looped suspension rope running in the outer tube 301, is attached permanently from the top by means of a transverse pin. Through the outer tube 301, swivel 23, rotary link 201 and channel 104, runs the safety line 20, in the form of a resilient line, which connects to the kite at the point where the kite can be flown, and it is attached under the body 1 to the handle by a knot. On the upper longitudinal part of the body 1, there is mounted slidably an release member in the form of a release rim 1001 in the form of a plastic handle with a round outer cross-section, widening in the upper part and a longitudinal through hole matching the cross-section of the upper part of the body 1, whereby it can slide along the body. The user may apply a force 1009 with an upward vector to the active release rim 1001. Inside the body 1, in its central part, there is a through guide groove 101 of rectangular shape, in the axis of which, in the front and rear walls, on the inside of the release rim 1001, there are mounting holes 10010. In the guide groove 101 and in the mounting holes 10010, there is the first link 14 in the form of a cylindrical connection with which the first end of the intermediate element in the form of a push rod 1301 is rotatably connected. It is located in the recess 109 which is on the right side of the inside of the body 1 and leads downwards. The first connecting member is rotatably attached to the second end of the push rod 1301 by means of a second link 15 in the form of a cylindrical connection. The first connecting member is in the form of an assembly comprising a connecting member base 501 in the shape of a flat metal three-way plate and a catching element 503 in the form of a metal hook with a throat opening on the right side and an outer slant 505 in the lower part. The connecting member base 501 is connected by its left lateral corner to the push rod 1301, through the second link 15, it has a protruding pin 502 on its lower corner and is attached by its upper corner, rotatably by means of a main cylindrical connection 6 in the form of a metal cylinder, to the body 1, in the connection socket 4 which has the form of a chamber located in the lower part of the body 1. The connection socket 4 has an elongated inlet hole 401 at its base. Also rotatably mounted on the main cylindrical connection 6 is the catching element 503 which is connected to the connecting member base 501 by a resilient element 5010, in the form of a metal tension spring. The second connecting member or assembly 7, in the form of a steel rim, is coupled to the catching element 503 in the closed position. The second connecting member or assembly 7 is in the form of a steel rim and has an outer slant 702 in the upper part of the outline. The second connecting member or assembly 7 is located at the first end of the detachable element 8 in the form of a short polymeric linkage attached permanently at its other end 803 with a pin to the lower left part of the body 1 to form loops 20. In the area of the lower left part of the body 1, a safety pin 22 in the form of a flexible polymer strip with a round cross-section is also pivotally attached to it. The user can insert an active second connecting member or assembly 7 into the inlet 401 by applying a force with an upward vector. In the lower parts of the side walls of the release rim 1001, there are longitudinal openings 1008 in which resilient bendable elements are placed 1104, in the form of longitudinal resilient arms which are the protruding parts of the polymeric release rim 1001 and are connected to it continuously and uniformly by their tops and by their outer sides protruding therefrom. The bendable elements 1104 in their lower parts on the inner side have semicircular recesses with which, when closed, they adjoin the semicircular convex shaped pieces 1010 located on the sides of the body 1, above the horizontal thickening 1013. Bending elements 1104 may exert pressing resilient forces with vectors 1105, applied in their internal recesses and directed towards semicircular convex shaped pieces 1010 on the sides of the upper part of the body 1. In the vicinity of the connections between the bendable elements 1104 and the release rim 1001, there is an adjusting assembly comprising an adjustment positioning member in the form of a thread integrated with the release member 19017 in the form of a thread on the outer surfaces of the release rim 1001 and the resilient bendable arms 1104, and a mobile adjusting element threadedly connected thereto in the form of a first threaded member 1907 in the form of an active outer adjustment rim with a thread on the inner side. The adjusting assembly 1907, 19017 adjusts the pressure of the resilient arms 1104 against the semicircular convex shaped pieces 1010 of the body 1. The operation of the device **in the third embodiment** is based on the fact that the active release rim 1001, as a result of pressing forces with vectors 1105 directed perpendicularly from the longitudinal axis towards the semicircular convex shaped pieces 1010 of the body 1 and coming from resilient bendable elements 1104, is maintained on the body 1 in the closed position, i.e. in such a position that it is moved downwards, bordering with its base on the circumferential thickening 1013 of the body 1. In the closed position, the release rim 1001 by means of a connection through the first link 14, and the push rod 1301 and the second link 15, locks the connecting member base 501, preventing its rotation on the main cylindrical connection 6. The connecting member base 501, through a resilient connection with the element 5010, holds in the closed position also the catching element 503 which locks the inlet 401 in the body 1. In order to connect the elements 3 and 8, by fastening the detachable element 8 in the body 1, the user, acting with force, slides the active second connecting member or assembly 7 of the detachable element 8 into the inlet hole 401 in the body 1, turning to the right (clockwise) on the main cylindrical connection 6 the catching element 503 due to the outer slants 505 and 702 connecting members 5 and 7, which tightens the resilient element 5010. When the second connecting member or assembly 7 is inserted into the end of the connection socket 4, the resilient force of the resilient element 5010 acting on the catching element 503 rotates it counterclockwise back into the closed position, coupling it to the second connecting member or assembly 7 which is then snapped into the connection socket 4, thereby connecting the detachable element 8 to the body 1, forming loops 20 into which the user clips the hook 2701 of his trapeze harness 27. In order to release a connection between elements 3 and 8, disconnecting a detachable element 8 from the body 1, for example in an emergency, the user applies to the active release rim 1001 a sufficient force 1009 with an upward vector to overcome the resilient forces with vectors 1105, coming from the bendable elements 1104, causing them to bend outwards as a result of their lower widened parts being pushed by the convex shaped pieces 1010 of the body 1. By lifting the release rim 1001 together with the first link 14, mounted to it in the mounting holes 10010, which is lifted along the guiding groove 101 of the body 1, the user also lifts the intermediate push rod 1301, sliding in the recess 109 of the body 1, which by means of the second link 15 lifts the hook base 501, which pivots to the right on the main cylindrical connection 6 in the connection socket 4. The base of the hook 501, by means of a protruding pin 502, pulls the catching element 503, so that it rotates clockwise on the main cylindrical connection 6, which results in the release of the first connecting member 5 from the second connecting member or assembly 7 and the release of the connection between the detachable element 8 and the body 1, resulting in the disengagement of the user from the kite canopy 24 generating the aerodynamic lift. In this situation the user is optionally only connected to the safety line 20, which keeps the kite 24 in a safe fly. After the release operation, the user moves the release rim 1001 downwards, back to the closed position, which results in the push rod 1301 also moving downwards, resulting in a left turn at the main cylindrical connection 6 of the connecting member base 501 and its return to the starting position, where it holds the catching element 503 in the closed position by connection with the resilient element 5010. In order to change the setting of the release force adjustment mechanism, the user, by means of the adjusting assembly 1907, 19017 determining the initial value of the resilient forces with vectors 1105, coming from the bendable elements 1104 and pressing them against the convex shaped pieces 1010 of the body 1, determines the value of the minimum force 1009 with an upward vector with which the user must act on the release rim 1001 in order to move it upwards to release the connection between the second connecting member or assembly 7 and the first connecting member 5, which results in the element being detached 8 from the body 1. This is achieved in such a way that the user turns to the right or left the adjusting mobile element in the form of a first threaded element 1907 in the form of a threaded rim which, thanks to the threaded connection with the positioning adjusting element in the form of a thread integrated with a release member 19017, in the form of an outer thread, makes a progressive movement and moves up or down, thus loosening or pressing the elastic bendable elements 1104 in the form of arms. The increase of the pressure by moving the first threaded element 1907 downwards is caused by pressing against the body 1, with its lower edge, the upper parts of the outer sides of the resilient arms 1104 protruding beyond the outline of the rim 1001. The reduction of the pressure by moving the first threaded element 1907 upwards is caused by loosening the outer sides of the resilient arms 1104. By turning the active swivel 23 in the axis of the aerodynamic lift, the user can rotate the attached element 3 in relation to the device being restrained by its harness 27. This is achieved by means of a swivel connection between the lower part of the rotary link 201 and the fixed fastener 2 of the body 1, while the upper part of the rotary link 201 is mounted non-rotatably in a swivel 23, to which the attached element 3 is also mounted non-rotatably.

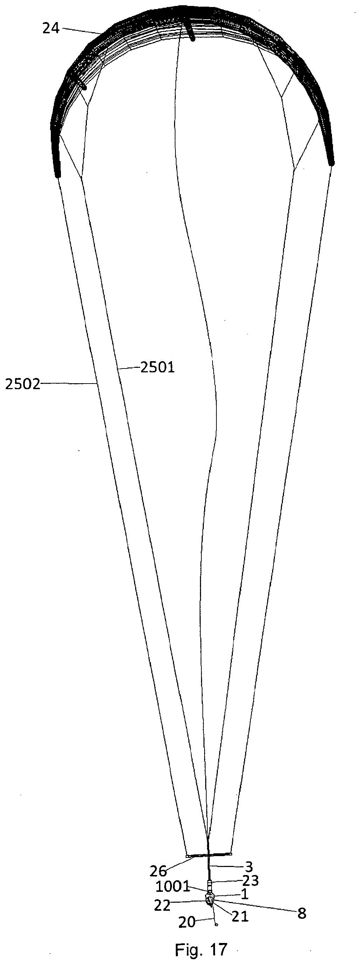

The object of the invention **in the fourth embodiment** represents a device which is part of a control system for a pulling kitesurfing kite 24 (see on the fig. 17), having a safety quick release equipped with a release force adjustment mechanism as well as latching and counter-rotation functions. It consists of a body 1, in the form of a plastic element which is elongated at the top, has a horizontal circumferential thickening 1013 at half its height and a bifurcation at the bottom. In the upper part of the body 1, there is a swivel fixed fastener 2 in the form of an upward opening with a vent in its upper part, to which, by means of a rotary link 201 and a swivel 23, an attached element 3 in the form of a suspension rope leading to the front lines 2501 of the kite 24 is attached. The rotary link 201 is a metal sleeve with a widening at the base and at the top. The swivel 23 is in the form of a plastic sphere with an outer longitudinal corrugation and a shaped piece in the upper part. The rotary link 201 is fixed in the fixed fastener 2 with its lower widening, while with its upper widening, it is glued permanently, from the bottom, inside the swivel 23, on which the attached element 3 is permanently fastened from the top by threading and sewing. On the upper longitudinal part of the body 1, there is mounted slidably an release member in the form of a release rim 1001 in the form of a plastic handle with widening in the upper part and a longitudinal through hole matching the upper part of the body 1 on which it can move. The user may apply a force with an upward vector 1009 to the active release rim 1001. Inside the body 1, in its central part, there is a cylinder 103, in the middle of which, on both sides of the body, on its front and rear sides, there are guide grooves 101, through which, parallel to them, there are guide grooves 1003 narrower than them in the inner walls of the release rim 1001. In the guide grooves 101 and in the guide grooves 1003, there is slidably fitted a first link 14 in the form of a cylindrical connection with which there is rotatably connected the first end of the intermediary element 13 in the form of a push rod which is located in a recess 109 which is situated on the right-hand side of the interior of the body 1 and which connects with the connection socket 4, in the form of a chamber located in its lower right-hand part. To the other end of the push rod, there is rotatably attached the first connecting member 5, by means of the second link 15, in the form of a cylindrical connection with its left side, which connecting member is rotatably attached, by means of the main cylindrical connection 6 in the form of a metal cylinder, to the body 1 in the connection socket 4. The first connecting member 5 is in the form of a metal hook with the throat opening facing to the right, the catching element 503 to the right and an outer slant 505 at the bottom of the outline. The second connecting member or assembly 7 is in the form of a steel rim. At the bottom of the connection socket 4, there is an inlet hole 401 into which the user can insert an active second connecting member or assembly 7 by exerting a force with the upward vector. The second connecting member or assembly 7 has an outer slant 702 in the upper part of its outline which, together with the outer slant 505 of the first connecting member 5, allows rotation of the first connecting member 5 on the main cylindrical connection 6, when inserting the second connecting member or assembly 7 into the hole of the connection socket 4. The second connecting member or assembly 7 is located at the first end of the detachable element 8 in the form of a short flexible linkage attached permanently at its other end 803 with a pin to the lower left part of the body 1 to form loops 21. Inside the cylinder 103, a resilient tensible element 1102 is mounted on the upper end of the first link 14, in the form of a metal tension spring which can act on the release rim by means of a force with the downward vector 1105. The lower end of the element 1102 is attached to a perpendicularly arranged mobile adjusting element in the form of an relocatable element 19011 in the form of a screw which has a corrugated lower surface of the head, and which by its thread is connected to the locking element of the adjustment in the form of a threaded locking element 19012 in the form of a nut. The relocatable element 19011 and the threaded locking element 19012 are bolted on the two outer sides of the positioning adjusting element, in the form of an adjusting guide 19010 in the form of an elongated through hole, positioned vertically in the lower part of the cylinder 103 of the body 1. The adjusting guide 19010 has a corrugated surface on one of its sides, which contacts the notch of the relocatable element 19011, thereby positioning it efficiently. The elements 19010, 19011 and 19012 form an adjusting assembly. The operation of the device **in the forth embodiment** is based on the fact that the active releasing rim 1001, as a result of an pulling force with a downward vector 1105, coming from the resilient tensible element 1102, and transmitted through the connection via the intermediate first link 14 is held on the body 1 in a closed position, that is the one in which it is shifted downwards relying on a circumferential thickening 1013. In the closed position, the pulling force with a downward vector 1105 also restrains the first connecting member 5, via the intermediate member 13 in the form of the push rod, connected to the element 1102, via the first link 14 and the second link 15, which prevents the first connecting member 5 from rotating clockwise at the main cylindrical connection 6. In the closed position, the first connecting member 5 locks the inlet hole 401 in the body 1 with its lower catching part in the form of a catching element 503. In order to join the elements 3 and 8 by fastening the detachable element 8 in the body 1, the user, acting with force, pushes upwards the second connecting member or assembly 7 of the detachable element 8 into the inlet hole in the body 1, turning clockwise the first connecting member 5 on the main cylindrical connection 6, due to outer slants 505 and 702 of the connecting members 5 and 7, which lifts its left side and the second link 15, and thereby the intermediary element 13. The intermediary element 13 slides along the recess 109 together with the first link 14, which slides along the guide grooves 101 of the body and the guide grooves 1003 of the decoupling element, without lifting the release rim 1001. When the second connecting member or assembly7 of the detachable element 8 is inserted into the end of the connecting member seat 4, the resilient force of the downward vector 1105 from the tensible element 1102 via the first link 14 draws the intermediary element 13 back down, which push rod, retracting via the second link 15, rotates the first connecting member 5 on the main cylindrical connection 6 counterclockwise, back into the closed position, engaging the catching element 503 in the second connecting member or assembly 7 in the form of a rim and thus coupling the elements 5 and 7, connecting the detachable element 8 to the body 1 and closing the loop 21 formed by the detachable element 8, into which loop the user connects the hook 2701 of his trapeze harness 27. In order to release the connection between the elements 3 and 8, releasing the detachable element 8 from the body 1, for example in an emergency situation, the user acts on the release rim 1001 with a sufficiently large force with the upward vector 1009 to lift it up together with the first link 14, overcoming the resilient force with the downward vector 1105 from the tensible element 1102, at the same time lifting the first link 14, which lifts up the push rod 13, which rod, by means of the second link 15, lifts up the left side of the first connecting member 5, whereby it rotates it clockwise on the main cylindrical connection 6 to the open position. In this way, the user releases the second connecting member or assembly 7 from its coupling to the first connecting member 5, opening the loops 21 and releasing the kitesurfing kite 24. When the user releases the release rim 1001, the resilient force with the downward vector 1105 pulls it together with the first link 14 and the push rod downwards, at the same time rotating the first connecting member 5 counterclockwise to its initial position. In order to change the setting of the release force regulating mechanism, the user adjusts, by means of the adjusting device 19010, 19011 and 19012, adjusts the force of the resilient tension of the tensible element 1102 in the form of a tension spring, expressed in terms of a downward vector 1105, and thus sets a lower threshold for the force 1009 with an example vector pointing in the opposite direction with which it must act on the release rim 1001 in order to release the connection. In order to make the adjustment, the user loosens the adjusting locking element in the form of a threaded locking element 19012, in the form of a nut, by unscrewing it from the thread of the mobile adjusting element in the form of a relocatable element 19011, in the form of a screw, and then moves the relocatable element 19011 together with the lower end of the tensible element 1102 hooked thereon up or down along the positioning adjusting element in the form of an adjusting guide 19010, thereby tightening or loosening the tensible element 1102 in the form of tension spring. Moving the relocatable element 19011 down makes the tensible element 1102 in the form of spring tighter so that more force is required to lift the release rim 1001 up, and conversely, moving the relocatable element 19011 up makes the tensible element 1102 in the form of spring looser so that less force is required to lift the release rim 1001 up. By turning the swivel 23 in the axis of the aerodynamic lift, the user can rotate the attached element 3 in relation to the loop 21 held by his trapeze harness 27. This is achieved by means of a swivel connection between the body 1 and the lower part of the rotary link 201, which is attached non-rotatably in the swivel 23 with its upper part.

The object of the invention **in the fifth embodiment** represents a device which is part of a control system for a pulling kitesurfing kite 24, having a safety quick release equipped with a release force adjustment mechanism as well as latching and counter-rotation functions. It consists of a body 1, in the form of a plastic element, longitudinal in its upper longitudinal part, which has a horizontal circumferential thickening 1013 at half its height and widens at the bottom, terminating in a bifurcation at its base. The body 1 consists of a front 107 part and a rear part 108. In the upper part of the body 1, there is a swivel fixed fastener 2 in the form of an upward opening with a vent in its upper part, to which, by means of a rotary link 201 and a swivel 23, an attached element 3 in the form of a suspension rope leading to the lines 2501 of the kite 24 is attached. The rotary link 201 is a metal sleeve with widenings at the base and at the top. The swivel 23 is in the form of a plastic sphere with an outer longitudinal corrugation and a shaped piece in the upper part. The rotary link 201 is attached rotatably in the fixed fastener 2 with its lower widening, and with its upper widening, it is glued permanently from the bottom into the interior of the swivel 23, to which an attached element 3, in the form of a the threaded and stitched suspension rope, is attached permanently from the top by means of a pin. On the upper longitudinal part of the body 1, there is mounted rotatably an release member in the form of a release rim 1001 in the form of a plastic handle with widening in the upper part and a longitudinal through hole matching the cross-section of the upper part of the body 1 thanks to which it can rotate. The active release rim 1001 consists of a front part 1004 and a rear part 1005. To the active release rim 1001, the user can apply a force with an exemplary vector 1009 pointing to the right, applied to its exterior at the central point. Between the body 1 and the releasing rim 1001, there is a circumferential recess 1016 in which, between the body 1 and the releasing rim 1001, there is located a resilient twistable element 1103 in the form of a metal torsion spring which is attached to the releasing rim 1001 with its first, lower end. The twistable element 1103 is mounted to the adjusting assembly 19014, 19015, with its other upper end, being attached to the mobile adjusting element in the form of a multi-stage socket 19014, in the form of a rotating ring which has three adjusting holes and which can rotate on the body 1, being above the release rim 1001, and which, thanks to an internal widening at its lower end, rests on the upper end of the circumferential recess 1016. At the height of the adjusting holes of the multi-stage socket 19014, the body 1 has a cylindrical hole of the pin 1015 located perpendicularly to its longitudinal axis, with a narrowing in the area of the outlet, in which the positioning adjustment element in the form of an adjusting pin 19015 with a widened base by which it is held in the hole 1015 is slidably mounted to the body. Between the base of the pin 19015 and the bottom of the hole 1015, there is an additional resilient element 18 in the form of a compression spring. Depending on the setting of the adjusting assembly, the pin 19015 is located in one of the three adjusting holes of the multi-stage socket 19014. On the right side of the body 1, below the circumferential recess 1016, there is a convex shaped piece 1010 in the form of a small prism connected to the body 1 with one side, along which the rotational movement of the releasing rim 1001 may be guided by means of a circumferential recess 1007 on, for example, the front side of its inner hole. Inside the body 1, there is a diagonally running recess 109. In the inner wall of the release rim 1001, there is a downwardpointing guiding recess 10015. Through the recesses 109 and 10015, there runs an intermediate element in the form of a release tie 1305, which is attached with one end to the release rim 1001 and with the other to the first connecting member 5. The first connecting member 5 is rotatably mounted, by means of a main cylindrical connection 6 in the form of a metal cylinder, to the body 1 in the connection socket 4, which is a chamber located in the lower right part the body 1. The first connecting member 5 is in the form of a metal hook with the throat opening facing to the right, ending with the catching element 503 to the right and an outer slant 505 at the bottom of the outline. The first connecting member 5 is also connected to the body 1 by a resilient element 5010, in the form of a small torsion spring. At the bottom of the connection socket 4, there is an inlet hole 401 into which the user can insert an active second connecting member or assembly 7 by exerting a force with the upward vector. The second connecting member or assembly 7 is in the form of a steel rim with a slanted 702 outer curve in its upper part. The second connecting member or assembly 7 is located at the first end of the detachable element 8 in the form of a short polymeric linkage attached at its other end 803 permanently by a pin to the lower part of the body 1, forming a loop 21, in the vicinity of which a safety pin 22 is also pivoted to the body, in the form of a polymer strip with a round cross-section. A twistable element 1103 may act on the release rim 1001 with a rotating resilient force with a vector 1105 pointing, for example, to the left. The operation of the device **in the fifth embodiment** is based on the fact that the active release rim 1001, as a result of a rotating force with vector 1105 directed to the left in this example, coming from a resilient twistable element 1103, is held in a closed position on the body 1, resting on the right wall of its circumpherential recess 1007, in this example, on a convex shaped piece 1010 attached to the body 1. In order to connect the elements 3 and 8, by fastening the detachable element 8 in the body 1, the user, acting with force, slides upwards the second connecting member or assembly 7 of the detachable element 8 into the inlet hole 401 in the body 1, turning to the right (clockwise) on the main cylindrical connection 6 the first connecting member 5, due to the outer slants 505 and 702 connecting members 5 and 7, and by tightening the resilient element 5010. After inserting the second connecting member or assembly 7 into the end of the connection socket 4, the resilient force of the resilient element 5010 rotates the first connecting member 5 on the main cylindrical connection 6 counterclockwise back to the closed position, which connecting member rests with its lower right catching element 503 against the right side of the connection socket 4, closing the inlet hole 401 in the body 1. Thus the first connecting member 5 engages with the second connecting member or assembly 7 inserted into the connection socket 4, locking it into the body 1 and at the same time forming loops 21 created by the detachable element 8 attached to the second connecting member or assembly 7. The user then clips the hook 2701 of his trapeze harness 27 into the loop 21, threading it with a safety pin 22 to prevent accidental release. To release the connection of the elements 3 and 8, releasing the detachable element 8 from the body 1, for example in an emergency situation, the user acts on the release rim 1001 with a sufficiently large force with the vector 1009 pointing to the right in this example and applied to the outer part of the rim 1001 at a central point to rotate it clockwise on its axis, on the upper round part of the body 1, having overcome the resilient force with the vector 1105 pointing to the left in this example, coming from the twistable element 1103. By rotating the release rim 1001, the user simultaneously pulls the intermediate release tie 1305, which runs through the recesses 109 and 10015 lifts the left side of the first connecting member 5, rotating it clockwise to the open position on the main cylindrical connection 6, thus the user releases the second connecting member or assembly 7 from its connection with the first connecting member 5, allowing it to slide out of the inlet hole 401, which opens the loops 21 and results in the release of the element 3 in the form of suspension rope leading to the lines 25 of the kite 24. When the user releases the release rim 1001, the resilient force with the vector 1105 pointing to the left in this example, rotates the rim 1001 around itself back clockwise until the convex shaped piece 1010 mounted to the body 1 meets the resistance of the right wall of the circumpherential recess 1007 of the rim 1001. Due to the resilient force of the resilient element 5010, the first connecting member 5 returns to the closed position where it rests with its catching element 503 against the right-hand wall of the connection socket 4. In order to change the setting of the release force control mechanism, the user adjusts, by means of an adjusting assembly 19014, 19015, the initial tension of the resilient twistable element 1103 in the form of a torsion spring and thus the force which the spring exerts on the rim 1001 at the point of connection between them, expressed by a vector 1105 pointing to the left in this case, thereby determining the lower threshold for the force with an exemplary vector 1009 pointing in the opposite direction, which must be exerted on the release rim 1001 in order to rotate it to release the connection between the detachable element 8 and the body 1. In the initial position, the adjustment is set in the central position, i.e. when the positioning adjusting element in the form of an adjusting pin 19015 is in the central hole of the mobile adjusting element in the form of a multi-stage socket 19014, blocking its rotation. In order to change the adjustment, the user pushes the adjusting pin 19015, deep into the hole 1015 in the body 1, thus tensioning an additional resilient element 18 in the form of a compression spring. He then rotates the unlocked multi-stage socket 19014 in the form of a ring to which a twistable element 1103 in the form of a torsion spring is attached at its upper end. Rotating the socket 19014 clockwise in this example results in the user putting additional tension on the twistable element 1103, increasing the force by the force needed to rotate the rim 1001 on the body 1 to disengage the element 8 therefrom. After sufficient rotation of the multi-stage socket 19014 clockwise, its leftmost adjusting hole encounters the positioning element in the form of an adjusting pin 19015 which, by pushing out an additional resilient element 18 by the resilient force, enters into this hole and thus positions the multi-stage socket 19014, locking it in the position chosen by the user. Rotating the socket 19014 counterclockwise in this example results in the user loosening the twistable element 1103, reducing the force required to rotate the rim 1001 on the body 1 to disengage the detachable element 8 therefrom. After sufficient rotation of the multi-stage socket 19014 counterclockwise, its rightmost adjusting hole encounters the positioning element in the form of the adjusting pin 19015 which pin, due to the pushing out of the additional compressible element 1801 by the resilient force, enters into this hole and thus positions the multi-stage socket 19014, locking it in the chosen position. By turning the swivel 23 in the axis of the aerodynamic lift, the user can rotate the attached element 3 in relation to the loop 21 held by his trapeze harness 27. This is achieved by means of a swivel connection between the body 1 and the lower part of the rotary link 201, which is attached non-rotatably in the swivel 23 with its upper part.

The object of the invention **in the sixth embodiment** represents a device which is part of a control system for a pulling kitesurfing kite 24, having a safety quick release equipped with a mechanism changing a magnitude of a release force, as well as latching and counter-rotation functions. It consists of a body 1, in the form of a plastic element, longitudinal in its upper longitudinal part, which has a horizontal circumferential widening 1013 at half its height and widens at the bottom, terminating in a bifurcation at its base. In the upper part of the body 1, there is a fixed fastener 2 in the form of a transversely mounted pin, through which a stitched attached element 3, in the form of a suspension rope leading to the lines 2501 of the kite 24 is threaded. On the upper longitudinal part of the body 1, there is mounted slidably an release member in the form of a release rim 1001 in the form a plastic handle with widening in the upper part and a longitudinal through hole matching the cross-section of the upper part of the body 1 thanks to which it can rotate. The user may apply a force 1009 with an upward vector to the active release rim 1001. Inside the front and rear walls of the release rim 1001, there are two mounting holes 10010, in which the first link 14 is mounted transversely with its two ends, in the form of a longitudinal cylinder which passes through a guide groove 101 in the middle part of the body 1. From the guide groove 101, towards the right bottom of the body 1, there is a recess 109 ending in a connection socket 4 in the form of a chamber in which chamber the first connecting member 5 is rotatably mounted to the body 1 on a main cylindrical connection 6 in the form of a metal cylinder. The first connecting member 5 is in the form of a metal hook with the throat opening facing to the right, ending with the catching element 503 to the right and an outer slant 505 at the bottom of the outline. The first connecting member 5 is also connected to the body 1 by a resilient element 5010, in the form of a small torsion spring. At the bottom of the connection socket 4, there is an inlet hole 401 into which the user can insert an active second connecting member or assembly 7, which takes the form of a steel rim with a slanted outer curve 702 in its upper part, by acting on it with a force with the upward vector. The second connecting member or assembly 7 is located at the first end of the detachable element 8 in the form of a short polymeric linkage attached permanently at its other end 803 with a pin to the lower part of the body 1 to form loops 21. In the area of the fastening of the element 803, a safety pin 22 is also pivotally mounted to the body 1, in the form of a polymeric resilient linkage with a round cross-section. The first connecting member 5 is connected to the release rim 1001 by an intermediate element in the form of a release tie 1305 that runs through the recess 109 of the body 1. In the upper left part of the release rim, there is an adjusting through hole 10011, perpendicular to the longitudinal axis, which has a narrowing on its right side. In the adjustment through hole 10011, there is a resilient compressible element 1101 in the form of a compression spring which, with its right end, pushes against the recess 1017 in the upper left part of the body 1 by means of an intermediate contact element 1109 in the form of a plastic cylinder with a semicircular right end, with a widening on its left side, which slides left or right in the hole 10011. With its other end, the spring 1101 presses against the adjusting assembly 1907, 19017 through the mobile adjusting element in the form of a first threaded element 1907 in the form of a pressure screw which is threadedly connected to the positioning adjusting element in the form of a thread integrated with the release member 19017 in the form of a thread located inside the through hole 10011. The resilient compressible element 1101 can act on the body 1, through a contact element 1109, by a resilient force with the vector 1105 applied to its right end and pointed to the right. The operation of the device **in the sixth embodiment** is based on the fact that the active release rim 1001, as a result of a resilient force with the vector 1105 pointed to the right, coming from the resilient compressible element 1101, is held on the body 1 in a closed position, i.e. when its lower edge is close to its circumferential thickening 1013. This is achieved by means of an intermediate contact element 1109 which enters the recess 1017 of the body 1 with its right end, thus preventing the release rim 1001 from being accidentally lifted upwards. By means of a widening at its base, the contact element 1109 is supported by the narrowing at the right outlet of the adjustment through hole 10011 to prevent excessive protrusion. In the closed position, the intermediate release tie 1305, connecting the release rim 1001 and the first connecting member 5 is slack and the first connecting member 5 is held in the closed position by the resilient force of the resilient element 5010 in the form of a torsion spring, i.e. when it is rotated on the main cylindrical connection 6 to the extreme left (i.e. counterclockwise), resting with its catching element 503 against the right wall of the connection socket 4. In order to connect the elements 3 and 8, by fastening the detachable element 8 in the body 1, the user, acting with force, slides upwards the second connecting member or assembly 7 of the detachable element 8 into the inlet hole 401 in the body 1, turning to the right (clockwise) on the main cylindrical connection 6 the first connecting member 5, due to the outer slants 505 and 702 connecting members 5 and 7, and by tightening the resilient element 5010. After inserting the second connecting member or assembly 7 into the end of the connecting member seat 4, the resilient force of the resilient element 5010 rotates the first connecting member 5 on the main cylindrical connection 6 counterclockwise back to the closed position , closing the inlet hole 401 in the body 1 with its catching element 503. Thus the first connecting member 5 engages with the second connecting member or assembly 7, in the form of a rim, inserted into the connection socket 4, locking it into the body 1 and at the same time forming loops 21 created by the detachable element 8 attached to the second connecting member or assembly 7. The user then clips the hook 2701 of his trapeze harness 27 into the loop 21, threading it with a safety pin 22 to prevent accidental release. In order to release the connection between the elements 3 and 8, releasing the detachable element 8 from the body 1, for example in an emergency situation, the user acts on the release rim 1001 with a sufficiently large force with the vector 1009 pointed upwards and applied to the outer part of the rim 1001, for example at a central point, to lift the rim 1001 while overcoming the mechanical friction present and the resilient force, with the vector 1105 directed to the right, coming from the compressible element 1101. When the release rim 1001 is being raised, the protuberance of the body 1 above the recess 1017 presses against the contact element 1109, pushing it deep into the adjustment through hole 10011, thereby putting the compressible spring 1101 under tension. By lifting the release rim 1001, the user simultaneously pulls the intermediate release tie 1305 attached to it , which running through the recess 109, lifts the left side of the first connecting member 5, rotating it clockwise on the main cylindrical connection 6 to the open position, thereby the user releases the second connecting member or assembly 7 from its connection with the first connecting member 5, allowing it to slide out of the inlet hole 401, which releases the connection between the detachable element 8 and the body 1 and opens the loops 21 and causes the suspension rope 3 to disengage from lines 2501 of the kite 24. To return the device to its initial position, the user moves the release rim 1001 back down so that its lower edge is flush with the horizontal thickening 1013 of the body 1 and the contact element 1109 pressed by the spring 1101 is again in the recess 1017 of the body 1. Thus, by loosening the release tie 1305, the resilient force of the resilient element 5010 rotates the first connecting member 5 back to the closed position where it rests against the right-hand wall of the connection socket 4 with its catching element 503. In order to change the setting of a mechanism adjusting magnitude of the release force, the user adjusts, by means of the adjusting assembly 1907, 19017 the initial tension of the compressible resilient element 1101 in the form of a torsion spring, and thus the force which the spring exerts on the body 1 expressed by a friction force vector 1105 pointing to the right, thereby determining the lower threshold for the force 1009 with an exemplary vector pointing upwards which must be exerted on the release rim 1001 to lift it, in order to release the connection between the detachable element 8 and the body 1. In order to change the adjustment, the user uses a tool to turn the mobile adjusting element in the form the first threaded element 1907, in the form of a pressure screw, which, thanks to its threaded connection with the positioning element in the form a thread integrated with the release member 19017 in the inner hole 10011, generates its progressive movement, changing the initial tension of the spring 1101. By turning the first threaded element 1907 clockwise, the user tightens the compressible element 1101, increasing the force required to lift the release rim 1001 in order to release the connection. By turning the first threaded element 1907 counterclockwise, the user loosens the compressible element 1101, decreasing the force required to lift the release rim 1001 in order to release the connection.

The object of the invention **in the seventh embodiment** represents a device which is part of a control system for a pulling kitesurfing kite 24, having a safety quick release equipped with a mechanism changing a magnitude of a release force, as well as latching and counter-rotation functions. It consists of a plastic body 1 in the shape of an inverted "Y", the lower part of which is wider and forked at its ends and the single upper part of which has a circular cross-section with an outer circumferential thickening 1013 running through the center. In the lower central part of the body 1, a chamber of the cylinder 103 is longitudinally located. A cylindrical channel 104 runs through the entire height of the body 1 and a rotary link 201 is placed in it. At the bottom of the cylindrical channel 104, there is a fixed fastener 2 in the form of a sectional narrowing, to which, from above, through a rotary link 201 and a swivel 23, an attached element 3 is fastened, in the form of a suspension rope leading to the lines 2501 of the kite 24. The rotary link 201 is in the form of a cylindrical sleeve which has a circular through hole along its entire length, and which has widenings in its lower and upper sections. The rotary link 201, with its upper part which extends over the body 1, is rotatably attached to the swivel 23 in the form of a plastic corrugated ball with a shaped piece in the upper part. The attached element 3 is fastened with its end in the form of a loop to the swivel 23 by means of a transverse pin. The attached element 3 runs upwards in the outer tube 301, connecting above the control bar to the support kite flying lines canopy. A safety line 20 runs through the outer tube 301, through the swivel 23 and through the rotary link 201. The upper end of the line is connected to the kite at the point where it can be flown safely, and the lower end under the body 1 is equipped with a handle. Outside the upper part of the body 1, there is a slidably release member in the form of a release rim 1001, in the form of a plastic handle with a thickening in the upper part and with a central drop in the lower part. Inside the release rim 1001, on the right side, there is a recess 1007 with a slanting shape in the lower part. A releasing force 1009 with an upward vector may act to the active release rim 1001. On the right side of the interior of the lower part of the body 1, there is a connection socket 4 in the form of a chamber in which the first connecting member is rotatably mounted to the body 1 by means of the main cylindrical connection 6 in the form of a metal cylinder. The first connecting member is in the form of a set consisting of a base of the connecting member 501 connected to the catching element 503 by means of an additional a cylindrical connection 509. The catching element 503 is in the form of a metal arm in the shape of a horizontal, downward-curved arch, with a hole and a straight wall on the left-hand side. The base of the connecting member 501 is a longitudinal metal element in vertical alignment with a central hole through which the main cylindrical connection runs 6. It has a lower arm ending with a second hole and a straight wall, and in its upper part has an arm 508 with a rounded tip which, in the closed position, is inserted into the recess 1007 of the release rim 1001 which keeps it in a vertical position, thus preventing rotation of the connecting member base 501 at the main cylindrical connection 6. The catching element 503 is rotatably connected with its hole to the lower hole of the connecting member base 501 by means an additional cylindrical connection 509 in the form of a metal cylinder on which the resilient element 5010 of the connecting member is mounted in the form of a torsion spring, independently attached by its ends to elements 501 and 503. At the bottom of the connection socket 4, there is an inlet hole 401 into which, in the closed position, a second connecting member or assembly 7 is inserted in the form of a metal rectangular rim made of steel wire, to the lower part of which a detachable element 8 is attached in the form of the end of a short polymeric linkage permanently fixed at its other end 803, by means of a pin, to the lower part of the body 1, forming loops 21. A safety pin 22 in the form of a flexible strip with circular cross-section is rotatably mounted in the lower left part of the body 1 by means of a cylindrical connection. With the first connecting member assembly 501, 503, 509, 5010 in the closed position, a second connecting member or assembly is coupled 7, such that the right free end of the catching element 503 passes through the hole in the metal hoop which is the second connecting member or assembly 7. In a cylindrical channel 103 on the outside of the rotary link 201, there is a resilient tensible assembly in the form of a magnetic assembly formed by a second magnetic element 1108, in the form of a cylindrical neodymium magnet, fixed to the bottom of the cylinder 103, and a first magnetic element 1107, in the form of a cylindrical neodymium magnet. The unipolar poles of the first magnetic element 1107 and the second magnetic element 1108 point in the same direction, which causes the elements 1107 and 1108 to pull to each other. The first magnetic element 1107 is fixed in its upper part to the adjusting assembly 1907, 1908, 1205, by means of an adhesive connection with the mobile adjusting element in the form of a first threaded element 1907 in the form of a headless screw, which is a cylindrical sleeve with a thread on the outside and a longitudinal through hole, to which an attached element 1909 in the form of a metal prism is attached. The first threaded element 1907 is connected threadedly to a positioning adjusting element in the form of a second threaded element 1908, in the form of a knurled nut, rotatably mounted in a rectangular through hole in the adjusting hole 10013 located in the release rim 1001. The elements 1107, 1108, 1907 and 1908, are located in a cylinder 103 and have cylindrical shapes with inner holes by which they are seated on the outside of the rotary link 201. In the longitudinal axis of the central part of the release rim 1001, there is a through gouge 10014 in which the guide element 1909 is placed and on the left side of which a scale 1205 is engraved outside the body 1. The magnetic assembly 1107, 1108, via the elements 1907, 1908, can act on the magnetic release rim 1001 by a pulling force with a downward vector 1105. **The operation of the device in the seventh embodiment** is based on the fact that the release member in the form of a releasing rim 1001, via the elements 1907, 1908, due to the action of an pulling force with a downward vector 1105 from the magnetic assembly 1107, 1108, is held on the body 1 in a closed position, i.e. in such a position that it is moved downwards and its lower part adheres to the circumferential thickening 1013 of the body 1. In the closed position the first connecting member, in the form of an assembly of elements 501, 503, 509, 5010 is immobilised by the release rim 1001 in such a way that its upper arm 508 is placed in the hole of its recess 1007, which prevents it from rotating clockwise on the main cylindrical connection 6. In the closed position, the catching element 503 of the first connecting member locks the inlet hole 401 in the body 1. In order to connect the detachable element 8 with the attached element 3, i.e. to fasten the detachable element 8 in the body 1, the user forcefully inserts the active second connecting member or assembly 7 of the detachable element 8 into the inlet hole 401 of the body 1 by lifting the right side of the catching element 503 with upper part the second connecting member or assembly 7 up, rotating counterclockwise on the additional cylindrical connection 509 and tightening the resilient element 5010. When the active second connecting member or assembly 7 in the form of a metal rim is inserted into the connection socket 4 and the upper part of the rim reaches a height above the rotated catching element 503, the resilient force of the resilient element 5010 acting on the catching element 503, rotates it clockwise back into the horizontal closed position until it stops at right angle to the base of the connecting member 501, by the contact of a straight wall at the bottom of the connecting member base 501 with a straight wall at the left end of the catching element 503, snapping the catching element 503 into the rim opening of the second connecting member or assembly 7 and thus coupling the first connecting member assembly 501, 503, 509, 5010 to the second connecting member or assembly 7, which is locked into the connection socket 4. Thus the detachable element 8 is connected to the body 1, creating a loop 21 into which the user clips the hook 2701 of his trapeze harness 27, then threads a safety pin 22 to remain connected to the suspension rope 3 connected to the kite canopy 24. The user can optionally connect his harness 27 also to the handle of the safety line 20. To open the loop 21, i.e. to release the connection of the elements 3 and 8, releasing the detachable element 8 from the body 1, for example in an emergency situation, the user acts to the active release rim 1001 with a sufficiently large force 1009 with an upward vector to lift it upwards, having overcome a force with a downward vector 1105 coming from the magnetic assembly 1107, 1108. This releases the arm 508, located in the recess 1007 of the release rim 1001, which is part of the first connecting member assembly 501, 503, 509, 5010 whereby it can be completely rotated clockwise. This is achieved in such a way that the base of the connecting member 501, and with it the catching element 503 connected to it by an additional cylindrical connection 509, rotates clockwise at the main cylindrical connection 6. This results in the release of the second connecting member or assembly 7 and the disconnection of the elements 3 and 8, which causes the loop 21 to open and the hook 2701 of the user's trapeze harness 27 to slide out of the loop, leaving the user connected optionally to the safety line 20 only. After the user releases the release rim 1001, the pulling force with the downward vector 1105 pulls the release rim 1001 back down. Due to the inclined shape of the inner wall of the recess 1007 of the release rim 1001, which on its way back down encounters the arm 508 of the first connecting member, there is a counterclockwise rotation at the main cylindrical connection 6 of the first connecting member assembly 501, 503, 509, 5010 back to the initial position, which is when the arm 508 is in the recess 1007. In order to change a setting of the mechanism adjusting a magnitude of the release force, by means of the adjusting assembly formed by the elements 1907 and 1908, determining an initial value of an pulling force with a downward vector 1105, determines a value of a minimum force 1009 with an opposite upward vector with which he must act on the release rim 1001 to disengage the second connecting member or assembly 7 from the first connecting member assembly 501, 503, 509, 5010, in order to release the connection between the detachable element 8 and the body 1. By turning to the left or right the active positioning adjusting element in the form of a second threaded element 1908, which is rotatably mounted in the adjusting hole 10013, the user moves up or down the movable adjusting element threadedly connected thereto in the form of a first threaded element 1907 adhesively connected to the first magnetic element 1107, thereby causing it to move away from or back towards the second magnetic element 1108, thereby setting the initial value of the pulling force with the downward vector 1105. The progressive movement of the first threaded element 1907 occurs because the attached element 1909 fastened to it is held by the walls of the gouge 10014. The smaller the distance between the magnetic elements 1907 and 1108, the greater the magnetic force with the vector 1105, acting on the release rim 1001 to pull it downwards. The scale 1205 located nearby shows, through a gouge 10014, the current position of the first threaded element 1907 and thus the setting of the release force regulating mechanism. By turning the active swivel 23 in the axis of the aerodynamic lift, the user can rotate the attached element 3 in relation to the device being restrained by its harness 27. This is achieved by means of a rotatable connection between the upper part of the rotary link 201 and the swivel 23, while the lower part of the rotary link 201 is mounted non-rotatably at the bottom of the body 1.

The object of the invention **in the eighth embodiment** represents a device which is part of a control system for a pulling kitesurfing kite 24, having a safety quick release equipped with a release force adjustment mechanism with a lock as well as latching and counter-rotation functions. It consists of a plastic body 1 in the shape of an inverted "Y", the lower part of which is wider and forked at its ends and the single upper part of which has a circular cross-section with an outer circumpherential thickening 1013 running through the centre. In the central part of the body 1, there is a longitudinally located chamber of the cylinder 103, on the left and right ends of which, in the lower part, vertical through guide grooves 101 run, opening to the front and rear side of the body 1, and in the upper part of which there is a widening. There is a cylindrical channel 104 running through the body 1 along its entire height, and at the bottom of the body there is a fixed fastener 2 in the form of a widening, to which an attached element 3 is connected above the body 1 via a rotary link 201 and a swivel 23. The rotary link 201 is in the form of a cylindrical sleeve which has a circular through hole along its entire length, and which has widenings in its lower and upper sections. The rotary link 201, with its upper part which extends over the body 1, is rotatably attached to the swivel 23 in the form of a plastic corrugated ball with a shaped piece in the upper part. There is an attached element 3 permanently fastened to the swivel 23 from the top, in the form of a suspension rope running in the outer tube 301, which is connected to the lines 2501 of the kite 24 above the control bar. A safety line 20 runs through the outer tube 301, through the swivel 23 and through the rotary link 201. The upper end of the line is connected to the kite 24 at the point where it can be flown safely, and the lower end under the body 1 is equipped with a handle. Outside the upper part of the body 1, there is a slidably release member in the form of a release rim 1001, in the form of a plastic handle with a thickening in the upper part and with a central drop in the lower part. Inside the release rim 1001, on the right side, there is a recess 1007 with a slanting shape in the lower part. A force 1009 with an upward vector may act on the release rim. On the right side of the interior of the lower part of the body 1, there is a connection socket 4 in the form of a chamber in which the first connecting member is rotatably mounted to the body 1 by means of the main cylindrical connection 6 in the form of a metal cylinder. The first connecting member is in the form of a set consisting of the connecting member base 501 connected to the catching element 503 by means of an additional a cylindrical connection 509 in the form of a metal cylinder. The catching element 503 is in the form of a metal arm in the shape of a horizontal, downward-curved arch, with a hole and a straight wall on the left-hand side. The connecting member base 501 is a longitudinal metal element in vertical alignment with a central hole through which the main cylindrical connection runs 6. It has a lower arm ending with a second hole and a straight wall, and in its upper part has an arm 508 with a rounded tip which, in the closed position, is inserted into the recess 1007 of the release rim 1001 which keeps it in a vertical position, thus preventing rotation of the connecting member base 501 at the main cylindrical connection 6. The catching element 503 is rotatably connected with its hole to the lower hole of the connecting member base 501 by means of an additional cylindrical connection 509 on which a resilient element 5010 of the connecting member is mounted in the form of a torsion spring, independently attached by its ends to elements 501 and 503. At the bottom of the connection socket 4, there is an inlet hole 401 into which, in the closed position, a second connecting member or assembly 7 is inserted in the form of a metal rectangular rim made of steel wire, to the lower part of which a detachable element 8 is attached in the form of the end of a short rope permanently fixed at its other end 803, by means of a pin, to the left lower part of the body 1 and placed in the outer tube 801, forming a loop 21. A safety pin 22 is rotatably mounted in the lower left part of the body 1 by means of a cylindrical connection. With the first connecting member assembly 501, 503, 509, 5010 in the closed position, a second connecting member or assembly is coupled 7, such that the right free end of the catching element 503 passes through the hole in the metal hoop which is the second connecting member or assembly 7. In the cylindrical channel 103 on the outside of the rotary link 201, there is a compressible resilient element 1101 which takes the form of a metal compression spring supported at its lower end by two transverse spans 10012 integral with the lower central part of the release rim 1001 and passing through guide grooves 101 in the lower body 1. The compressible element 1101, with its lower end, may act on the transverse spans 10012 by an elastic force with the downward vector 1105. The compressible element 1101 is supported in its upper part by the adjusting assembly 1908, 1907, 1204 through the adjustable mobile element, located in the upper widened part of the cylinder 103, in the form of a second threaded element 1908 which is in the form of an inverted nut being a cylindrical sleeve with an elongated through hole and a thread on the outside, and to which the guide element 1909 is attached. The second threaded element is connected threadedly to the positioning adjusting element in the form of the first threaded element 1907 which is also located in the upper widened part of the cylinder 103 and has the form of an inverted screw having a widened hexagonal head, being a cylindrical sleeve with a longitudinal through hole inside of which there is a thread. The first threaded element 1907 is fixed with its head in the adjusting knob 1204 which is in the form of a plastic rim with an outer corrugation, which rim is rotatably mounted on the outside of the upper end of the body 1, on its outer edge. At the front of the upper part of the body 1, there is a through gouge 106 in which the guide element 1909 is placed and on the left side of which, on the outside of the body 1, a scale 1205 is engraved, and on the right side of which, there is a sliding locking element 1203 in the form of an arrowhead with a central notch in the upper part and an external tab in the lower part. The locking element 1203 is pressed against the adjusting knob 1204 by an additional spring-loaded element 18 in the form of a small compression spring. The operation of the device in the eighth embodiment is based on the fact that the release member in the form of a release rim 1001 is held in the closed position by a resilient force with a downward vector 1105 from a resilient compressible element 1101, in the form of a compression spring, which presses the release rim 1001 against the circumferential thickening 1013 in the body 1 through the transverse spans 10012. In the closed position the first connecting member, in the form of an assembly of elements 501, 503, 509, 5010 is immobilised by the release rim 1001 in such a way that its upper arm 508 is placed in the hole of its recess 1007, which prevents it from rotating clockwise on the main cylindrical connection 6. In the closed position, the catching element 503 of the first connecting member locks the inlet hole 401 in the body 1. In order to connect the detachable element 8 with the attached element 3, i.e. to fasten the detachable element 8 in the body 1, the user forcefully inserts the active second connecting member or assembly 7 of the detachable element 8 into the inlet hole 401 of the body 1 by lifting the right side of the catching element 503 with upper part of the second connecting member or assembly 7 up, rotating counterclockwise on the additional cylindrical connection 509 and tightening the resilient element 5010. When the second connecting member or assembly 7 in the form of a metal rim is inserted into the connection socket 4 and the upper part of the rim reaches a height above the rotated catching element 503, the resilient force of the resilient element 5010 of the connecting member, acting on the catching element 503, rotates it on the additional cylindrical connection 509 clockwise back into the horizontal closed position until it stops at right angle to the base of the connecting member 501, by the contact of a straight wall at the bottom of the connecting member base 501 with a straight wall at the left end of the catching element 503, snapping it into the rim opening of the second connecting member or assembly 7 and thus coupling the first connecting member assembly 501, 503, 509, 5010 to the second connecting member or assembly7, which is locked into the connection socket 4. Thus the detachable element 8 is connected to the body 1, creating a loop 21 into which the user clips the hook 2701 of his trapeze harness 27, then threads a safety pin 22 to remain connected to the suspension rope 3 connected to the kite canopy 24. The user can optionally connect his harness 27 also to the handle of the safety line 20. To open the loop 21, i.e. to release the connection of the elements 3 and 8, releasing the detachable element 8 from the body 1, for example in an emergency situation, the user acts to the active release rim 1001 with a sufficiently large force 1009 with an upward vector to lift it upwards, having overcome a resilient force with a downward vector 1105 coming from the compressible element 1101. This releases the arm 508, located in the recess 1007 of the release rim 1001, which is part of the first connecting member formed by the assembly of elements 501, 503, 509, 5010, whereby it can rotate clockwise on the main cylindrical connection 6. This is achieved in such a way that the base of the connecting member 501, and with it the catching element 503 connected to it by an additional cylindrical connection 509, rotates clockwise at the main cylindrical connection 6. This results in the release of the second connecting member or assembly 7 and the disconnection of the elements 3 and 8, which causes the loop 21 to open and the hook of the user's trapeze harness to slide out of the loop, leaving the user connected optionally to the safety line 20 only. After the user releases the release rim 1001, the resilient force with the downward vector 1105 presses the release rim 1001 back down. Due to the inclined shape of the inner wall of the recess 1007 of the release rim 1001, which on its way back down encounters the arm 508 of the first connecting member, there is a counterclockwise rotation at the main cylindrical connection 6 of the first connecting member assembly 501, 503, 509, 5010 back to the initial position, which is when the arm 508 is in the recess 1007. In order to change the setting of the release force adjustment mechanism, the user, by means of the adjusting assembly formed by the elements 1907, 1204 and 1908, determining an initial value of an pulling force with a downward vector 1105, determines a value of a minimum force 1009 with an opposite upward vector with which he must act on the release rim 1001 to disengage the second connecting member or assembly 7 from the first connecting member assembly 501, 503, 509, 5010 in order to release the connection between the detachable element 8 and the body 1. By turning counterclockwise or clockwise the adjusting knob 1204 rotatably mounted on the body 1, and thus the first positioning adjusting element attached to it, in the form of the first threaded element in the form of the first threaded element 1907, the user moves, by means of a threaded connection, the mobile adjusting element, in the form of the second threaded element 1908, and he does this by means of a guide element 1909 attached to it, which element is held by the walls of the gouge 106, introducing the second threaded element 1908 into a progressive movement which, as a result of changing its position, moves the ends of the compression spring 1101 towards or away from each other, thus regulating its resilient force with the vector 1105 acting on the release rim 1001, pressing it downwards. Thanks to a locking element 1203 mounted slidably on the surface of the body 1 below the adjusting knob 1204 and pressed by means of an additional resilient element 18, the position of the adjusting knob 1204 is locked, preventing accidental loosening of the setting of the release force adjustment mechanism. To make an adjustment with the adjusting knob 1204, the user must first pull down the sliding locking element 1203.by tightening an additional resilient element 18. The scale 1205 located nearby shows, through a gouge 106, the current setting of the release force regulating mechanism. By turning the active swivel 23 in the axis of the aerodynamic lift, the user can rotate the attached element 3 in relation to the device being restrained by its harness 27. This is achieved by means of a rotatable connection between the upper part of the intermediate rotary link 201 and the swivel 23, while the lower part of the rotary link 201 is mounted non-rotatably at the bottom of the body 1.

The object of the invention **in the ninth embodiment** represents a device which is part of a control system for a pulling kitesurfing kite 24, having a safety quick release equipped with a release force adjustment mechanism as well as latching and counter-rotation functions. It consists of a plastic body 1 in the shape of an inverted "Y", the lower part of which is wider and forked at its ends and the single upper part of which has a circular cross-section with an outer circumferential thickening 1013 running through the center. In the central part of the body 1, there is a longitudinally located chamber of the cylinder 103, on the left and right ends of which vertical through guide grooves 101 run, opening to the front and rear side of the body 1. A lid 1014 is inserted and glued into the upper part of the body 1, through guide grooves 101. There is a cylindrical channel 104 running through the body 1 along its entire height, and at the bottom of the body there is a fixed fastener 2 in the form of a widening, to which an attached element 3 is connected above the body 1 via a rotary link 201 and a swivel 23. The rotary link 201 is in the form of a cylindrical sleeve which has a circular through hole along its entire length, and which has widenings in its lower and upper sections. The rotary link 201, with its upper part extending over the body 1, is attached rotatably to a swivel 23 in the form of a plastic corrugated sphere with a shaped piece in the upper part to which an attached element 3 is permanently attached from above in the form of a suspension rope, running in an outer tube 301, which is connected to the lines 2501 of the kite 24 above the control bar. A safety line 20 runs through the outer tube 301, through the swivel 23 and through the rotary link 201. The upper end of the line is connected to the kite 24 at the point where it can be flown safely, and the lower end under the body 1 is equipped with a handle. Outside the upper part of the body 1, there is a slidably release member in the form of a release rim 1001, in the form of a plastic handle with a thickening in the upper part and with a central drop in the lower part. Inside the release rim 1001, on the right side, there is a recess 1007 with a slanting shape in the lower part. A force 1009 with an upward vector may act on the release rim 1001. On the right side of the interior of the lower part of the body 1, there is a connection socket 4 in the form of a chamber in which the first connecting member is rotatably mounted to the body 1 by means of the main cylindrical connection 6 in the form of a metal cylinder. The first connecting member is in the form of a set consisting of the connecting member base 501 connected to the catching element 503 by means of an additional a cylindrical connection 509. The catching element 503 is in the form of a metal arm in the shape of a horizontal, downward-curved arch, with a hole and a straight wall on the left-hand side. The connecting member base 501 is a longitudinal metal element in vertical alignment with a central hole through which the main cylindrical connection runs 6. It has a lower arm ending with a second hole and a straight wall, and in its upper part has an arm 508 with a rounded tip which, in the closed position, is inserted into the recess 1007 of the release rim 1001 which keeps it in a vertical position, thus preventing rotation of the connecting member base 501 at the main cylindrical connection 6. The catching element 503 is rotatably connected with its hole to the lower hole of the connecting member base501 by means of an additional cylindrical connection 509 in the form of a metal cylinder on which a resilient element 5010 of the connecting member is mounted in the form of a torsion spring, independently attached by its ends to elements 501 and 503. At the bottom of the connection socket 4, there is an inlet hole 401 into which, in the closed position, a second connecting member or assembly 7 is inserted in the form of a metal rectangular rim made of steel wire, to the lower part of which a detachable element 8 is attached in the form of the end of a short polymeric linkage fixed at its other end to the lower left part of the body 1 by means of a pin, thus forming a loop 21 in the closed position. A safety pin 22 in the form of a flexible strip with circular cross-section is rotatably mounted in the lower left part of the body 1 by means of a cylindrical connection. With the first connecting member assembly 501, 503, 509, 5010 in the closed position, a second connecting member or assembly is coupled 7, such that the right free end of the catching element 503 passes through the hole in the metal hoop which is the second connecting member or assembly 7. The cylindrical channel 103 outside the rotary link 201 contains an elastic element in the form of a compressible element 1101 which can exert a resilient force with a downward vector 1105. The compressible element 1101 which takes the form of a metal compression spring supported at its lower end by two transverse spans 10012 integral with the lower central part of the release rim 1001 and passing through guide grooves 101 in the lower body 1. The compressible element 1101 rests with its upper part against an intermediary span 1206 in the form of a rectangular wire rim which passes through guide grooves 101 in the upper part of the body 1 with its longer sides and protrudes beyond the body outline with the shorter sides. The intermediary span 1206 rests on the adjusting mobile element located on the upper part of the body, in the form of a second threaded element 1908, which is in the form of a plastic knurled nut with a corrugated outer circumference and is part of the adjusting assembly 12. The second threaded element 1908 is threadedly connected to the positioning adjustment element by means of a thread integrated with the body 19016, in the form of a plastic external thread located on the upper section of the body 1. A scale 1205 is engraved on the front of the upper body 1. The elements 19016, 1908, 1206 and 1205 form an adjusting assembly. The operation of the device **in the ninth embodiment** is based on the fact that the release member in the form of a release rim 1001 is held in the closed position by a resilient force with a downward vector 1105 from a resilient compressible element 1101, in the form of a compression spring, which presses the release rim 1001 against the circumferential thickening 1013 in the body 1 through the transverse spans 10012. In the closed position the first connecting member, in the form of an assembly of elements 501, 503, 509 and 5010 is immobilised by the release rim 1001 in such a way that its upper arm 508 is placed in the hole of its circumferential recess 1007, which prevents it from rotating clockwise on the main cylindrical connection 6. In the closed position, the catching element 503 of the first connecting member locks the inlet hole 401 in the body 1. In order to connect the detachable element 8 with the attached element 3, i.e. to fasten the detachable element 8 in the body 1, the user forcefully inserts the active second connecting member or assembly 7 of the detachable element 8 into the inlet hole 401 of the body 1 by lifting the right side of the catching element 503 with upper part of the second connecting member or assembly 7 up, rotating counterclockwise on the additional cylindrical connection 509 and tightening the resilient element 5010. When the second connecting member or assembly 7 in the form of a metal rim is inserted into the connection socket 4 and the upper part of the rim reaches a height above the rotated catching element 503, the resilient force of the resilient element 5010 of the connecting member, acting on the catching element 503, rotates clockwise back into the horizontal closed position until it stops at right angle to the base of the connecting member 501, by the contact of a straight wall at the bottom of the connecting member base 501 with a straight wall at the left end of the catching element 503, snapping it into the rim opening of the second connecting member or assembly 7 and thus coupling the first connecting member assembly 501, 503, 509, 5010 to the second connecting member or assembly 7, which is locked into the connection socket 4. Thus the detachable element 8 is connected to the body 1, creating a loop 21 into which the user clips the hook 2701 of his trapeze harness 27, then threads a safety pin 22 to remain connected to the suspension rope 3 connected to the kite canopy 24. The user can optionally connect his harness 27 also to the handle of the safety line 20. To open the loop 21, i.e. to release the connection of the elements 3 and 8, by releasing the detachable element 8 from the body 1, for example in an emergency situation, the user acts to the active release rim 1001 with a sufficiently large force 1009 with an upward vector to lift it upwards, having overcome a resilient force with a downward vector 1105 from the compressible element 1101 in the form of a compression spring that presses the release rim 1001 against the circumferential thickening 1013 in the body 1 through the transverse spans 10012. This releases the arm 508, located in the recess 1007 of the release rim 1001, which is part of the first connecting member formed by the assembly of elements 501, 503, 509 and 5010, whereby it can rotate clockwise. This is achieved in such a way that the base of the connecting member 501, and with it the catching element 503 connected to it by an additional cylindrical connection 509, rotates clockwise at the main cylindrical connection 6. This results in the release of the second connecting member or assembly 7 and the disconnection of the elements 3 and 8, which causes the loop 21 to open and the hook of the user's trapeze harness to slide out of the loop, leaving the user connected optionally to the safety line 20 only. After the user releases the release rim 1001, the resilient force with the downward vector 1105 presses the release rim 1001 back down. Due to the inclined shape of the inner wall of the recess 1007 of the release rim 1001, which on its way back down encounters the arm 508 of the first connecting member, there is a counterclockwise rotation at the main cylindrical connection 6 of the first connecting member assembly 501, 503, 509, 5010 back to the initial position, which is when the arm 508 is in the recess 1007. In order to change the setting of the release force adjustment mechanism, the user, by means of the adjusting assembly formed by the elements 19016, 1908, 1206, determining an initial value of an pulling force with a downward vector 1105, determines a value of a minimum force 1009 with an opposite upward vector with which he must act on the release rim 1001 to disengage the second connecting member or assembly 7 from the first connecting member assembly 501, 503, 509, 5010 in order to release the connection between the detachable element 8 and the body 1. By turning the active mobile element in the form of the second threaded element 1908 counterclockwise or clockwise, thanks to the threaded connection with the positioning element in the form of a thread integrated in the body 19016, the user moves the intermediary span 1206 along the guide grooves 101, thereby moves the upper end of the compression spring 1101 up or down, thereby moves the ends of the compression spring 1101 away from or towards each other, thus adjusting the spring resilient force with a vector 1105 acting on the release rim 1001, pressing it downwards. The scale 1204 in the middle of the upper part of the body 1 shows the current position of the mobile element 1908 and thus the current setting of the release force regulating mechanism. By turning the active swivel 23 in the axis of the aerodynamic lift, the user can rotate the attached element 3 in relation to the device being restrained by its harness 27. This is achieved by means of a rotatable connection between the upper part of the rotary link 201 and the swivel 23, while the lower part of the rotary link 201 is mounted non-rotatably at the bottom of the body 1.

The object of the invention **in the tenth embodiment** represents a device which is part of a control system for a pulling kitesurfing kite 24, having a safety quick release equipped with a release force regulation mechanism. It consists of a plastic body 1 in the shape of an inverted "Y", the lower part of which is wider and forked at its ends and the single upper part of which has a circular cross-section. In the central part of the body 1, there is a horizontal circumferential thickening 1013, and inside the lower part of the body 1, centrally and along the vertical axis, there is a cylindrical hole 103 which, with its upper part, enters into a wider through guide groove 101, with a rectangular outline, which penetrates to the front and rear side of the body 1. At the top of the body 1, there is a fixed fastener 2 in the form of a hole with a widening at the bottom, to which, there is an element attached 3 with its widened lower part, in the form of a linkage which is connected to the lines of the 2501 kite 24 above the control bar. Outside the upper part of the body 1, there is a slidably release member in the form of a release rim 1001, in the form of a plastic handle with a thickening in the upper part. The release rim 1001 is divided into a front part 1004 and a rear part 1005. Inside the release rim 1001, on the right side, there is a circumferential recess 1007 with a slanting shape in the lower part. A force 1009 with an upward vector may act on the release rim . On the right side of the inside of the lower part of the body 1, there is a connection socket 4 in the form of a chamber in which the first connecting member 5 in the form of a metal hook with a throat directed to the right side is rotatably mounted to the body 1 by means of a main cylindrical connection 6 in the form of a metal cylinder with its central hole, formed by the catching element 503 and with an upward projecting vertical arm 508 with a rounded tip, which arm, when in the closed position, is situated in the circumferential recess 1007 of the release rim 1001, counteracting the rotation of the first connecting member 5 on the main cylindrical connection 6. At the bottom of the connection socket 4, there is an inlet hole 401 into which, in the closed position, a second connecting member or assembly 7 is inserted in the form of a metal rectangular rim made of steel wire, to the lower part of which a detachable element 8 is attached in the form of the end of a short linkage permanently fixed at its other end 803, by means of a pin, to the lower part of the body 1, forming a loop 21. On the first connecting member 5 in the form of a hook, a second connecting member or assembly 7 in the form of a rim is fitted in the closed position. In the cylindrical channel 103, there is a resilient tensible element 1102 in the form of a resilient rope which, at its lower end, has a stitched loop which is attached to the body 1, by means of a pin 17. The tensible element 1102, in the form of a resilient rope, runs into the groove 101 with its upper end and is attached to the adjusting assembly 1901, 1902, 1904, 1905, 1906, by means of a adjusting mobile element in the form of a horizontally arranged rope drum 1901, positioned in the chamber of the groove 101, in the form of a cylinder with two widenings, seated horizontally and rotatably within the release rim 1001, through a drum pivot 1902 which is seated with its ends in holes 10010 provided on the rear side 1005 and the front side 1004 of the release rim 1001, the hole on the front side being a through hole. The tensible element 1102 is attached to the drum 1901 by means of a fixed fastener 19013 in the form of a mounting hole. On the drum pivot 1902, projecting outwards from the front side of the release rim 1001, there is an adjusting knob 1204 in the form of a flat plastic cylinder with a corrugated circumference, with a cross-sectional radius twice as long as the cross-sectional radius of the rope drum 1901. On the drum pivot 1902, between the rope drum 1901 and the front wall of the release rim 1001, there is an additional resilient element 18 in the form of a small compression spring. The rope drum 1901, at its end near the rear side 1005 of the release rim 1001, has a circumferentially positioned set of teeth 1904, triangular in shape, with the left arm perpendicular to the base and the right arm gently sloping in an arc shape. To the left, above the rope drum 1901, on the inside of the rear side 1005 of the release rim 1001, there is a positioning assembly resiliently mounted with its left side, in the form of a positioning pawl 1905 in the form of a resilient plastic arm with a straight-line right side which presses against the left side of one of the teeth of the set of teeth 1904 and with the left side attached to the release rim 1001 by means of a pawl fastener 1906 in the form of a pressure rivet. The tensible element 1102 acts on the rim 1001, via the rope drum 1901 and the pivot 1902, by means of an resilient pulling force with a downward vector 1105. **The operation of the device in the tenth embodiment** is based on the fact that the release member in the form of a release rim 1001, as a result of an pulling force with a downward vector 1105 transmitted through the drum 1901 and the drum pivot 1902 and originating from an resilient tensible element 1102, is held on the body 1 in a closed position, i.e. in such a position that it is moved downwards and its lower part adheres to the circumferential thickening 1013 of the body 1. In the closed position the first connecting member 5 is immobilised by the release rim 1001 in such a way that its upper arm 508 is placed in the hole of its circumferential recess 1007, which prevents it from rotating clockwise on the main cylindrical connection 6. In the closed position, the first connecting member 5 locks the inlet hole 401 in the body 1 with its lower catching element 503. In order to connect the detachable element 8 to the attached element 3, i.e. to fasten the detachable element 8 in the body 1, the user, by applying a force 1009 with the vector, lifts the release rim 1001 upwards to the open position, overcoming the existing pulling force with the downward vector 1105 from the resilient tensible element 1102. Lifting the release rim 1001 releases the arm 508 of the first connecting member 5 so that, due to the favourable distribution of its weight, it rotates clockwise on the main cylindrical connection 6, which opens the inlet hole 401 in the body 1. The user then inserts an active second connecting member or assembly 7 into it, in the form of a metal rim attached to the detachable element 8. After inserting the second connecting member or assembly 7 into the connection socket 4, the user releases the release rim 1001, whereby the pulling force 1009 with the downward vector from the tensioned tensible element 1102 draws the release rim 1001 back into the closed position, moving it downward along the upper part of the body 1 until it meets the horizontal circumferential thickening 1013. Due to the slanted shape of the right wall of the release rim 1001 in the lower part of the circumferential recess 1007, which rim on its way back down encounters the round tip of the arm 508 of the first connecting member, the first connecting member 5 is rotated counterclockwise at the main cylindrical connection 6 which causes it to return to its initial position, i.e. when the arm 508 is in the circumferential recess 1007 and its lower catching element 503 locks the inlet hole 401, hooking the rim of the second connecting member or assembly 7, which results in its snapping into the connection socket 4. Thus, the detachable element 8 is connected to the body 1, creating a loop 21 into which the user clips the hook 2701 of his trapeze harness 27, connecting to the kitesurfing kite 24. To release from the kite 24, by releasing the connection between the elements 3 and 8, that is, by disconnecting the detachable element 8 from the body 1 by opening the loop 21, for example in an emergency, the user acts to the active release rim 1001 with a sufficiently large force 1009 with an upward vector to lift it upwards, having overcome the resilient force with a downward vector 1105 coming from the tensible element 1102. This releases the arm 508 located in the circumferential recess 1007, causing the first connecting member 5 to rotate clockwise on the main cylindrical connection 6, which results in the release of the second connecting member or assembly 7 from its catching element 503 and the disconnection of the element 8 from the body 1, which causes the loop 21 to open and the user's harness hook to slide out of it. When the user releases the release rim 1001, the resilient force of the tensible element 1102 pulls the release rim 1001 back into the closed position, moving it downwards until it meets the horizontal circumferential thickening 1013. During this movement, due to the slanted shape of the inner wall of the circumferential recess 1007, the first connecting member 5 is rotated counterclockwise on the main cylindrical connection 6 which causes it to return to its initial position. In order to change the setting of the release force regulating mechanism, the user, by means of an adjusting device formed by the elements 1901, 1902, 1904, 1905, 1906 by setting the initial value of the pulling force with a downward vector 1105, pulling the release rim 1001 against the circumferential thickening 1013 of the body, sets the value of the minimum force with the opposite upward vector 1009 with which the user must act on the release rim 1001 in order to release the connection between the second connecting member or assembly 7 and the first connecting member 5, causing the element 8 to be disengaged from the body 1. This is done in such a way that by turning clockwise the active adjusting knob 1204 mounted rotatably on the pivot 1902 on the release rim 1001, the user simultaneously turns the rope drum 1901, winding the tensible element 1102 in the form of resilient rope attached to it and thus setting the initial value of its resilient pulling force with the downward vector 1105. Due to the positioning adjustable assembly in the form of a resilient pawl 1905 which presses against the steep sides of the teeth of the set of teeth 1904, circumferentially placed on the rope drum 1901, it is impossible to turn the rope drum 1901 counterclockiwise. The clockwise rotation is made possible by the fact that the gentle left sides of the teeth of the set of teeth 1904, when rotate, bend the resilient arm of the pawl frame 1905, raising it above its height. Due to the fact that the radius of the active knob 1204 is greater than the radius of the central part of the rope drum 1901 on which the tensible element 1102 in the form of resilient rope is wound, a winch mechanism is created, whereby the force required to turn the knob 1204 is smaller than the resistance force of the tensible element 1102 in the form of tensioned resilient rope. Due to the compression spring 18 located on the pivot 1902, between the front wall 1004 of the rim and the drum 1901, the drum 1901 is pressed against the rear wall 1005 of the rim, which maintains the contact between the pawl 1905 and the set of teeth 1904 located circumferentially at the rear end of the drum 1901. In order to release this contact, and therefore to allow the drum 1901 to rotate counterclockwise so that to release the tension on the resilient rope 1102, the user pulls the knob 1204, which is attached to the drum 1901 through the drum pivot 1902, towards himself (front), shifting the pivot 1902 in the mounting holes 10010, which results in the pawl 1905 being pulled out of the set of teeth 1904.

The object of the invention **in the eleventh embodiment** represents a device which is part of a control system for a pulling kitesurfing kite 24 having a safety quick release equipped with a mechanism adjusting a magnitude of a release force. The device consists of an elongated body 1 which has a rectangular cross-section in the upper wider part and a circular cross-section in the lower narrower part, the two parts being separated by a horizontal circumferential thickening 1013. The lower part of the body 1 ends in a connection socket 4, which has the form of a transverse through hole. In the upper part of the body 1, there is a fixed fastener 2, in the form of a sleeve with a pressure screw, which fastens to the body 1 an attached element 3 in the form of a polymer linkage leading to the lines 25 of the kite 24. Outside the body 1, in its upper part, there is a slidably release member in the form of a release rim 1001 which has the form of a cylindrical plastic handle with a widening in its upper part and has an elongated through hole of rectangular cross-section, which has a narrowing in its upper part. A force 1009 with an upward vector may act on the release rim 1001. The first connecting member 5 is rotatably mounted to the connection socket 4 by means of a main cylindrical connection 6 in the form of a metal cylinder with widenings at its base and at the tip, with its mounting hole formed by the circular curvature of its left end. The first connecting member is in the form of a metal rod also bent at right angles in the centre, with a circular recess at this point forming the catching element 503, while at its right end, the first connecting member 5 has an elongated arm 508 which, in the closed position, is located between the body 1 and the release rim 1001. The second connecting member or assembly 7 is placed on the catching element 503 in the closed position, in the form of a rectangular rim made of a metal wire, to the base of which, at its end, a detachable element 8 in the form of a short polymer linkage, is permanently attached. The detachable element 8 is attached with its other end 803 to the lower part of the body 1 by means of the main cylindrical connection 6, which forms a loop 21 in the closed position. To the other end of the detachable element 8, below the other end 803, a safety pin 22 in the form of a flexible polymeric linkage is pivotally mounted. Between the body 1 and the release rim 1001, there is a longitudinally arranged compressible element 1101 in the form of a stainless steel compression spring which rests with its upper end on the lower part of the circumferential thickening 1013 of the body 1 and which runs around the lower cylindrical part of the body 1. At its lower end, the copresible element 1101 in the form of compression spring is supported by a mobile adjusting element in the form of a second threaded element 1908 in the form of a nut which has a guide element 1909 on the outside and which is threadedly connected to a positioning adjusting element in the form of a first threaded element 1907, in the form of an adjusting screw with a through hole in the inner elongated hole through which the lower part of the body 1 passes. The first threaded element 1907 has a knurled head which is turned downwards and which is rotatably mounted in the adjusting hole 10013 of the release ring 1001. In the central part of the release rim 1001, there is a gouge 10014 in which the guide element 1909 is slidably fitted and along which, on the outer wall of the release rim 1001, there is an adjusting scale 1204. The compressible resilient element 1101, through the elements 1908 and 1907, acts on the release rim 1001 by a repulsive resilient force with a downward vector 1105. The elements 1907, 1908, 1909 form an adjusting assembly. The operation of the device **in the eleventh embodiment** consists in the fact that the release member in the form of a release rim 1001, via the elements 1908 and 1907 and due to a repulsive force with a downward vector 1105 coming from a compressible resilient element 1101, is held on the body 1 in a closed position, i.e. in such a position that it is moved downwards and rests on the upper part of the horizontal thickening 1013 of the body 1 with its internal narrowing in its upper part. In the closed position the first connecting member 5 may be immobilised by the release rim 1001 in such a way that when its arm 508 is inserted in the space between the release rim 1001 and the body 1, its clockwise rotation on the main cylindrical connection 6 is prevented. In order to connect the detachable element 8 to the attached element 3, i.e. to fasten the detachable element 8 in the body 1, the user, by applying a force 1009 with the upward vector, lifts the release rim 1001 upwards to the open position, overcoming the existing repulsive force with the downward vector 1105 from the resilient compressible element 1101. Lifting the release rim 1001 releases the arm 508 of the first connecting member 5, resulting in a favourable distribution of its weight so that it rotates clockwise on the main cylindrical connection 6. The user then applies the second connecting member or assembly 7, in the form of a metal rim attached to the detachable element 8, the first connecting member 5 by placing on the catching element 503. The user then rotates the first connecting member 5 on the main cylindrical connection 6 counterclockwise, placing the arm 508 along the lower part of the body 1, then releases the release rim 1001, whereby a repulsive force 1009 with the downward vector from the compressed compressible element 1101 pushes the release rim 1001 back into the closed position, sliding it down over the upper part of the body 1 until it meets a horizontal circumferential thickening 1013, thereby locking the arm 508 in the space between the release rim 1001 and the body 1, preventing it from turning clockwise on the main cylindrical connection 6. Thus, the detachable element 8 is connected to the body 1, creating a loop 21 into which the user clips the hook 2701 of his trapeze harness 27, then threading it with a safety pin 22 to prevent the loop 21 from accidentally falling out of the hook 2701. To release from the kite by releasing the connection between the elements 3 and 8, by detaching the detachable element 8 from the body 1 by opening the loop 21, for example in an emergency, the user acts to the active release rim 1001 with a sufficiently large force 1009 with an upward vector to lift it upwards, having overcome the repulsive force with a downward vector 1105 coming from the compressible element 1101. This releases the arm 508 located in the space between the release rim 1001 and the body 1, causing the first connecting member 5 to rotate clockwise on the main cylindrical connection 6, which results in the second connecting member or assembly 7 extending from its catching element 503 and the element 8 disengaging from the body 1, causing the loop 21 to open and the hook 2701 of the harness 27 to slide out of it. When the user releases the release rim 1001, the resilient force of the compressible element 1101 pulls the release rim 1001 back into the closed position, moving it downwards until it meets the horizontal circumferential thickening 1013. In order to change the setting of a mechanism adjusting a magnitude of the release force, the user, by means of an adjusting device formed by the elements 1907, 1908 and 1909, by setting the initial value of the pulling force with a downward vector 1105, presses the release rim 1001 downwards, sets the value of the minimum force 1009 with the opposite upward vector with which the user must act on the release rim 1001 in order to release the connection between the second connecting member or assembly 7 and the first connecting member 5, causing the element 8 to be disengaged from the body 1. This is achieved in such a way that by turning the knurled head of the adjusting positioning element in the form of the first threaded element 1907, which is rotatably mounted in the release rim 1001, the user, thanks to a threaded movable connection, moves the connected mobile adjusting element in the form of the second threaded element 1908 upwards or downwards. This is achieved by means of a guide element 1909 attached to it, placed inside a longitudinal gouge 10014, which forces the progressive movement of the element 1908 caused by the rotational movement of the element 1907 caused by their threaded connection. The downward movement of the mobile adjustable element 1908, by turning the head of the screw 1907 clockwise, puts the ends of the spring 1101 away from each other, reducing the initial tension of the spring, which results in the need for the user to apply a smaller force 1009 with an upward vector with which he must act on the release rim 1001 in order to release the connection between the second connecting member or assembly 7 and the first connecting member 5. Moving the mobile adjusting element 1908 upwards, by turning the head of the screw 1907 counterclockwise, brings the ends of the compressible element 1101 in the form of spring closer together, brings the ends of the spring closer together increasing its initial tension, which results in the user having to apply a greater force 1009 with an upward vector with which he must act on the release rim 1001 to release the connection. The scale 1205 on the outside of the release rim 1001, shows, through a gouge 10014, the current position of the guide element 1909 attached to the second threaded element 1908, indicating the current setting of the release force regulating mechanism.

The object of the invention **in the twelve embodiment** shows a universal device, also applicable for kitesurfing as well as for water skiing, horse sledding or gliding, connecting two suspension ropes, having a latching function and a safety quick release with a release force adjustment mechanism. It consists of an elongated body 1, the upper part of which has a fixed fastener 2 in the form of a pin embedded in the body 1, to which an attached element 3 is attached in the form of a section of the first suspension rope, for example, leading to a pulling kite 24, or a motorboat, or a glider winch, or a sled animal. Inside the body 1, in its lower right part, there is a connection socket 4 in the form of a chamber, and in its lower, central and upper parts there is a longitudinal vertical recess 109, in the vertical axis of which, on the front and rear wall of the body 1, there are through guide grooves 101 with a rectangular outline. The body 1 movably incorporates an release member 10 in the form of a cord whose first curled and stitched end is engaged with the first link 14 in the form of a cylindrical connection whose ends are seated in guide grooves 101. The other end of the release member 10 in the form of a cord is located above the upper surface of the body 1 and a handle is attached to it. The user may apply a force 1009 with an upward vector to the release member 10. Also the first end of the intermediate element 13 in the form of a metal push rod is rotatably attached to the first link 14, inside the space in the body 1 formed by the combined chambers of connection socket 4 and the recess 109, in the form of a metal push rod, the second end of which is rotatably mounted by means of a second link 15 to the left side of the first connecting member 5, which connecting member is in the form of a metal hook with a throat opening on the right side, a catching element 503 on the right side and a slant 505 in the outer lower part of the contour. In the connection socket 4 the first connecting member 5 is rotatably attached to the body 1 with its upper part through a main cylindrical connection 6 in the form of a metal cylinder. At the bottom of the connection socket 4, there is an inlet hole 401, into which the user can insert an active second connecting member or assembly 7. The active second connecting member or assembly 7 is in the form of a metal hoop with an outer slant 702 in the upper part. The second connecting member or assembly 7 is attached to the end of a detachable element 8 in the form of a threaded and stitched section of a second suspension rope, which leads, for example, to the trapeze harness 27 of a kitesurfer, or to a towing bar held in the hands of a water skier, or to a glider, or to a coupled vehicle. Between the release member 10 and the body 1, there is a resilient element 11 in the form of a resilient rope coiled in two stitched loops at both ends. The resilient element 11 acts on the release member 10, via the first link 14 to which it is attached at its upper end, with a resilient force with a downward vector 1105. **In the first variation**, the lower end of the resilient element 11 is movably connected to the adjusting element 12, which is in the form of a positioning adjusting element in the form of a metal clamping cleat having a narrow inlet hole 19019 in the upper part and a wide outlet hole 19020 in the lower part, covering the left side and the base, while the inner surface of the front and rear walls of the adjusting element 12 is covered with a corrugation in the form of parallel diagonal indentations running from the left bottom to the right top. The resilient element 11 enters the adjusting element 12 through its upper narrow hole 19019 and then wedges into the indentations between the front and rear walls of the adjusting element 12. The resilient element 11, in its central section above the inlet 19019 to the adjusting element 12, has a stop in the form of a contact element 1109 in the form of a permanently fixed plastic ball, while it is looped with its lower end extending beyond the lower outlet hole 19020 of the adjusting element 12 through a mobile handle 19018 in the form of a plastic cylinder with a hole in the centre. **In the second variation**, the lower end of the resilient element 11 is permanently fixed to a contact element 1109 in the form of a plastic ball, inside of which it connects to a mobile adjusting element in the form of a mobile handle 19018 in the form of a pull cord, which loops with its other end against a plastic cylinder with a hole in the centre. The mobile handle 19018 is movably connected to the adjusting element 12, which is in the form of a positioning adjusting element in the form of a metal clamping cleat having a narrow inlet hole 19019 in the upper part and a wide outlet hole 19020 in the lower part, covering the left side and the base, while the inner surface of the front and rear walls of the adjusting element 12 is covered with a corrugation in the form of parallel diagonal indentations running from the left bottom to the right top. The mobile handle 19018 enters, with its upper part in the form of a line, into the adjusting element 12, through its upper narrow hole 19019, and then wedges into the indentations between the front and rear walls of the adjusting element 12. The operation of the device **in the twelve embodiment** is based on the fact that the active releasing member 10, as a result of an pulling force with a downward vector 1105, coming from the resilient element 11, and transmitted through the connection via the intermediate first link 14 is held on the body 1 in a closed position, i.e. in which it is moved downwards and the first link 14 rests on the bottom of the guide grooves 101. In the closed position, the pulling force with a downward vector 1105 also immobilises the first connecting member 5, via the intermediary element 13 in the form of the push rod, connected to the resilient element 11, the first link 14 and the intermediary element 3 in the form of push rod, which prevents the first connecting member 5 from rotating clockwise at the main cylindrical connection 6. In the closed position the first connecting member 5 locks the inlet 401 in the body 1 with its lower catching part which constitutes the catching element 503. In order to join the elements 3 and 8, by clipping the detachable element 8 in the body 1, the user, acting with an upward vector force inserts the active second connecting member or assembly 7 of the detachable element 8 into an inlet hole 401 in the connection socket 4 in the body 1 by rotating clockwise the first connecting member 5 on the main cylindrical connection 6, due to the favourable angle of attack obtained by the slants 505 and 702 in the outer contours of the connecting members 5 and 7. The first connecting member 5 lifts the first link 14 by means of a rotating connection to the push rod 13 and by means of a second link 15 moves the first link upwards in the guide grooves 101, at the same time tensioning the resilient element 11 in the form of a resilient rope. When the second connecting member or assembly 7 is inserted into the end of the hole in the connection socket 4, the resilient force with a downward vector 1105, coming from resilient element 11, acts on the first link 14, pulling it downwards, together with the intermediary element 13, through engagement through the second link 15, rotates the first connecting member 5 on the main cylindrical connection 6 to the left and, through the catching element 503, couples it to the second connecting member or assembly 7, thus snapping it in the body 1. In order to release the connection of the elements 3 and 8, releasing the detachable element 8 from the body 1, for example, in an emergency situation, the user acts on the release member 10, with a sufficiently large force 1009 with an upward vector, to lift it together with the first link 14, overcoming the resilient force with the downward vector 1105, coming from the resilient element 11. By lifting the release member 10, the user simultaneously lifts the first link 101, in the guide grooves 14, which raises the push rod 13, which, through the second link 15, lifts the left side of the first connecting member 5, thus rotating it on the main cylindrical connection 6 to the right to the open position and disengaging the connecting members 5 and 7 from the connection, thereby releasing the connection between the detachable element 8 and the body 1. When the user releases the release member 10, the resilient force with the downward vector 1105, coming from the receptive element 11, pulls the release member 10 together with the first link 14 and the push rod 13, downwards, at the same time rotating the first connecting member 5 to the left to its initial position, i.e. closed. **In a first variation**, in order to change the setting of the release force adjustment mechanism, the user pulls the resilient element 11 attached thereto to the lower left side, i.e. parallel to the indentation line of the adjusting element 12, by means of the mobile handle 19018, thereby releasing the wedging of the contact element 1109 in the adjusting element 12. Then, in order to reduce the force with the upward vector 1009 needed to release the connection between the detachable element 8 and the body 1, the user, at the same non-wedging angle, introduces a resilient line, self-retracting by the spring force, being the tensile element 11, through the outlet hole 19020 into the body, thereby loosening its initial tension and reducing the spring force with the vector 1105 with which it pulls the release member 10 downward. Alternatively, in order to increase the force with the upward vector 1009 required for releasing the connection between the detachable element 8 and the body 1, the user, instead of loosening it, pulls the resilient element 11, in form of a resilient line, to the outside of the body through the outlet hole 19020 by means of the mobile handle 19018 at the same non-wedging angle, thereby increasing its pre-tension, thereby increasing the spring force with the downward vector 1105 with which it pulls the release member 10 downward. After the adjustment, the user changes the angle of the resilient element 11 protruding below the body 1 to vertical by moving the mobile handle 19018 to the right, which again wedges it into the indentations of the adjusting element 12 in the form of a cleat. To avoid a dangerous situation, the user must not over-tension the resilient element 11, as the diameter of the limiting contact element 1109 does not allow it to be pulled through the narrow inlet hole 19019 of the adjusting element 12. **In the second variation**, in order to change the setting of the release force adjustment mechanism, the user pulls the adjusting mobile handle 19018 towards the lower left side, i.e. parallel to the indentation line of the adjusting element 12, thus releasing its wedging in the adjusting element 12. Then, in order to reduce the force 1009 with the upward vector required to release the connection between the detachable element 8 and the body 1, the user, at the same non-wedging angle, introduces the mobile handle 19018 through the outlet hole 19020 into the body 1. The mobile handle 19018 is automatically pulled into the body by the spring force of the resilient element 11, thereby loosening the pre-tension of the resilient element 11, thereby reducing its spring force with the vector 1105 with which it pulls the release member 10 downwards. Alternatively, in order to increase the force 1009 with the upward vector required to release the connection between the detachable element 8 and the body 1, the user, instead of loosening it, pulls the mobile handle 19018 at the same non-wedging angle by pulling a larger portion of it outside the body 1 through the outlet hole 19020, thereby pulling the resilient element 11 connected to it inside the body 1, thereby increasing its pre-tension, thereby increasing the resilient force with downward vector 1105 with which it pulls the release member 10 downward. After the adjustment, the user, by moving the mobile handle 19018 to the right, changes its position to vertical, which again wedges it into the indentations of the adjusting element 12 in the form of a cleat. To avoid a dangerous situation, the user must not over-tension the resilient element 11, as the diameter of the limiting contact element 1109 does not allow it to be pulled through the narrow inlet hole 19019 of the adjustment element 12.

The object of the invention **in the thirteenth embodiment** represents a device which is part of a control system for a pulling kitesurfing kite 24, having a safety quick release equipped with a mechanism adjusting a magnitude of a release force, as well as latching and counter-rotation functions. It consists of a body 1, in the form of a plastic element which is elongated at the top, has a horizontal circumferential widening 1013 at half its height and a bifurcation at the bottom. In the upper part of the body 1, there is a swivel fixed fastener 2 in the form of an upward opening with a vent in its upper part, to which, by means of a rotary link 201 and a swivel 23, an element 3 attached in the form of a suspension rope leading to the lines 25 of the kite 24 is attached. The rotary link 201 is a metal sleeve with a widening at the base and at the top. The swivel 23 is in the form of a plastic sphere with an outer longitudinal corrugation and a shaped piece in the upper part. The rotary link 201 is fixed in the fixed fastener 2 with its lower widening, while with its upper widening, it is glued permanently, from the bottom, inside the swivel 23, on which the attached element 3 is permanently fastened from the top by threading and sewing. On the upper longitudinal part of the body 1, there is mounted slidably an release member in the form of a release rim 1001 in the form of a plastic handle with widening in the upper part and a longitudinal through hole matching the upper part of the body 1 on which it can move. The user may apply a force 1009 with an upward vector to the active release rim 1001. Inside the body 1, in its central part, there is a cylinder 103, in the middle of which, on both sides of the body, on its front and rear sides, there are guide grooves 101, through which, parallel to them, there are guide grooves 1003 narrower than them in the inner walls of the release rim 1001. In the guide grooves 101 and in the guide grooves 1003, there is slidably fitted a first link 14 in the form of a cylindrical connection with which there is rotatably connected the first end of the intermediary element 13 in the form of a push rod which is located in a recess 109 which is situated on the right-hand side of the interior of the body 1 and which connects with the connection socket 4, in the form of a chamber located in its lower right-hand part. To the other end of the push rod 13, there is rotatably attached the first connecting member 5, by means of the second link 15, in the form of a cylindrical connection with its left side, which connecting member 5 is rotatably attached, by means of the main cylindrical connection 6 in the form of a metal cylinder, to the body 1 in the connection socket 4. The first connecting member 5 is in the form of a metal hook with the throat opening facing to the right, the catching element 503 to the right and an outer slant 505 at the bottom of the outline. The second connecting member 7 is in the form of a steel rim. At the bottom of the connection socket 4, there is an inlet hole 401 into which the user can insert an active second connecting member or assembly 7 by exerting a force with the upward vector. The second connecting member 7 has an outer slant 702 in the upper part of its outline which, together with the outer slant 505 of the first connecting member 5, allows rotation of the first connecting member 5 on the main cylindrical connection 6, when inserting the second connecting member or assembly 7 into the hole of the connection socket 4. The second connecting member or assembly 7 is located at the first end of the detachable element 8 in the form of a short flexible linkage attached permanently at its other end 803 with a pin to the lower left part of the body 1 to form loops 21. With its lower end, the cylinder 103 enters into an oval adjusting hole 1012 arranged longitudinally along the center of the body 1. The adjusting hole 1012 has an inlet from the front side of the body 1 and is closed by a lid 1014 in the form of a plastic square. **In the first variation**, the adjusting hole 1012 includes an adjusting element 12 in the form of a positioning adjusting assembly comprising three horizontally arranged hooking elements which run into the adjusting hole 1012 from the right side, and with their right sides are integrated into the body 1, while with their free hooking ends located in the hole 1012, they are directed towards the lower left side. Inside the upper part of the cylinder 103, a resilient element 11 in the form of a metal tension spring is mounted at its upper end to the first link 14, which, through the first link 14, can exert a pulling force with the downward vector 1105 on the release rim. The lower end of the resilient element 11, in the form of a rim made of resilient wire, which terminates the tension spring, is placed on the upper hooking element of the adjusting assembly 12. **In a second variation**, the adjusting hole 1012 includes an adjusting assembly in the form of an positioning adjusting assembly 1202, formed by three cylindrical adjusting holes arranged in the central longitudinal axis of the body 1, running horizontally from the front side to the rear side of the body 1, with inlet holes from the front side. Into one of the holes in the positioning assembly 1202, there is a adjusting mobile element 1201 in the form of a metal pin with a narrowing at its front part protruding from the hole in the adjusting positioning assembly 1202, on which the lower end of the resilient element 11 in the form of a metal tension spring is attached by clamping. The upper end of the resilient element 11 is attached to the first link 14 by means of which it can exert a pulling force with downward vector 1105 on the release rim. The mobile element 1201 and the positioning assembly 1202 form an adjusting assembly. The operation of the device **in the thirteenth embodiment** is based on the fact that the active releasing rim 1001, as a result of a resilient force with a downward vector 1105, coming from the resilient element 11, and transmitted through the connection via the intermediate first link 14 is held on the body 1 in a closed position, that is the one in which it is shifted downwards relying on a circumpherential thickening 1013. In the closed position, the pulling force with a downward vector 1105 also immobilises the first connecting member 5, via the intermediate member 13 in the form of the push rod, connected to the resilient element 11, via the first link 14 and the second link 15, which prevents the first connecting member 5 from rotating clockwise at the main cylindrical connection 6. In the closed position, the first connecting member 5 locks the inlet hole 401 in the body 1 with its lower catching part in the form of a catching element 503. In order to join the elements 3 and 8 by fastening the detachable element 8 in the body 1, the user, acting with force, pushes upwards the second connecting member or assembly 7 of the detachable element 8 into the inlet hole 401 in the body 1, turning clockwise the first connecting member 5 on the main cylindrical connection 6, due to outer slants 505 and 702 of the connecting members 5 and 7, which lifts its left side and the second link 15, and thus the intermediary element 13 in the form of push rod. The push rod slides along the recess 109 together with the first link 14, which slides along the guide grooves 101 of the body and the guide grooves 1003 of the decoupling element, without lifting the release rim 1001. When the second connecting member or assembly 7 of the detachable element 8 is inserted into the end of the connecting member seat 4, the resilient force of the downward vector 1105 from the resilient element 11 via the first link 14 draws the push rod 13 back down, which push rod, retracting via the second link 15, rotates the first connecting member 5 on the main cylindrical connection 6 counterclockwise, back into the closed position, engaging the catching element 503 in the active second connecting member or assembly 7 in the form of a rim and thus coupling the elements 5 and 7, connecting the detachable element 8 to the body 1 and closing the loop 21 formed by the detachable element 8. The user then clips the hook 2701 of his trapeze harness 27 into the loop 21, threading it with a safety pin 22 to prevent accidental release. In order to release the connection between the elements 3 and 8, releasing the detachable element 8 from the body 1, for example in an emergency situation, the user acts on the release rim 1001 with a sufficiently large force 1009 with the upward vector to lift it up together with the first link 14, overcoming the forces, including the resilient force with the downward vector from the compressible element 11, at the same time lifting the first link 14, which lifts up the push rod 13, which rod, by means of the second link 15, lifts up the left side of the first connecting member 5, whereby it rotates it clockwise on the main cylindrical connection 6 to the open position. In this way, the user overcomes existing forces and releases the second connecting member or assembly 7 from its coupling to the first connecting member 5, opening the loops 21 and releasing the kitesurfing kite. When the user releases the release rim 1001, the resilient force with the downward vector 1105 pulls it together with the first link 14 and the push rod downwards, at the same time rotating the first connecting member 5 counterclockwise to its initial position. By turning the swivel 23 in the axis of the aerodynamic lift, the user can rotate the attached element 3 in relation to the loop 21 held by his trapeze harness 27. This is achieved by means of a swivel connection between the body 1 and the lower part of the rotary link 201, which is attached non-rotatably in the swivel 23 with its upper part. In order to change the setting of the magnitude of the release force adjustment mechanism **in the first variation**, the user, using the adjusting assembly 12, adjusts the force of the resilient element 11 in the form of a tension spring, expressed in terms of a downward vector 1105, and thus sets a lower threshold for the force 1009 with an example vector pointing in the opposite direction, with which he must act on the release rim 1001 to release the connection. In order to change the setting and adjust magnitude of the release force, the user removes the lower end of the resilient element 11 in the form of a rim at the end of the tension spring from the hooking element forming the adjusting element 12 with a pulling motion to the left and attaches it to the lowest, middle or highest hooking element of the adjusting assembly 12, thus changing the tension of the resilient element 11. Moving and hooking the lower end of the resilient element 11 in the lower position causes it to become tighter, so that more force is required to lift the release rim 1001 up, and conversely, moving and hooking the lower end of the resilient element 11 in the upper position causes the resilient element 11 to become looser, so that less force is required to lift the release rim 1001 up. After the adjustment has been made, the user locks the adjusting hole 1012 with a lid 1014. Selecting the middle setting gives an intermediate result. In order to change the setting of the release force adjustment mechanism **in the second variation**, the user, using the adjusting assembly 1201 and 1202, adjusts the force of the resilient element 11 in the form of a tension spring, expressed in terms of a downward vector 1105, and thus sets a lower threshold for the force with an example vector 1009 pointing in the opposite direction, with which he must act on the release rim 1001 to release the connection. In order to change the setting and adjust a magnitude of the release force, the user pulls out from one of the adjusting holes of the positioning assembly 1202 a mobile element 1201, in the form of a pin to which a resilient element 11 is attached by a lower end and inserts it into the lowest, middle or highest adjusting hole of the positioning assembly 1202, thereby changing the tension of the resilient element 11. Moving the mobile element 1201 to the lower position causes it to become tighter, so that more force is required by the user to lift the release rim 1001 up, and conversely, moving the mobile element 1201 to the upper position causes the resilient element 11 to become looser, so that less force is required to lift the release rim 1001 up. Selecting the middle setting gives an intermediate result. After the adjustment has been completed, the user locks the adjusting hole 1012 with a lid 1014, which prevents the mobile element 1201 in the form of a pin from accidentally slipping out of the adjusting hole of the positioning assembly 1202.

The invention has been exemplified with selected embodiments. However, the invention is not limited to these embodiments. It is obvious that modifications can be made without changing the essence of the solution. The presented embodiments do not fully exhaust the applicability of the invention.

The invention is suitable for industrial application in many fields. Undoubtedly, the broad fields of industrial exploitation of the invention may include sport and transport. The invention is particularly suitable for use in the manufacture of attachments for pulling kites to the user, in the manufacture of components needed for towing a skier behind a boat, for gliding, or for sledding. It is possible to apply the invention in the manufacture of accessories used in the transport of cargo and people.

### List of designations:

| | | | |
|---|---|---|---|
| 1 | Body | 1001 | Release rim |
| 101 | First guide groove | 1002 | Piston |
| 102 | Second guide groove | 1003 | Guide groove |
| 103 | Cylinder | 1004 | First part |
| 104 | Chanel | 1005 | Second part |
| 106 | Gouge | 1007 | Circumferential recess |
| 107 | Front part | 1008 | Hole for the arm |
| 108 | Rear part | 1009 | Force vector |
| 109 | Recess | 10010 | Link mounting hole |
| 1010 | Convex shaped piece | 10011 | Through hole |
| 1012 | Adjustment hole | 10012 | Transverse spans |
| 1013 | Circumferential thickening | 10013 | Adjusting hole |
| 1014 | Lid | 10014 | Gouge |
| 1015 | Pin hole | 10015 | Guide recess |
| 1016 | Circumferential recess | 11 | Resilient element or assembly |
| 1017 | Recess | 1101 | Compressible element |
| 2 | Fixed fastener | 1102 | Tensible element |
| 201 | Rotary link | 1103 | Twistable element |
| 3 | Attached element | 1104 | Bendable element |
| 301 | Outer tube | 1105 | Resilient force vector |
| 303 | Central suspension line | 1107 | First magnetic element |
| 4 | Connection socket | 1108 | Second magnetic element |
| 401 | Inlet | 1109 | Contact element |
| 5 | First connecting member or assembly | 12 | Adjusting element or assembly |
| 501 | Connecting member base | 1201 | Mobile element |
| 502 | Protruding pin | 1202 | Positioning element |
| 503 | Catching element | 1203 | Locking element |
| 505 | Slant | 1204 | Adjusting knob |
| 508 | Connecting member arm | 1205 | Scale |
| 509 | Additional cylindrical connection | 1206 | Intermediary span |
| 5010 | Resilient element | 13 | Intermediary element |
| 6 | Main cylindrical connection | 1301 | Push rod |
| 7 | Second connecting member or assembly | 1302 | Second push rod |
| 702 | Slant | 1305 | Release tie |
| 8 | Detachable element | 14 | First link |
| 801 | Outer tube | 15 | Second link |
| 803 | Fastening of the other end | 16 | Third link |
| 10 | Release member | 17 | Fixing pin |
| 18 | Additional resilient element | 19015 | Adjusting pin |
| 19 | Adjusting elements | 19016 | Integrated thread of the body |
| 1901 | Rope drum | 19017 | Integrated thread of the release member |
| 1902 | Drum pivot | 19018 | Mobile handle |
| 1903 | Pulling line | 19019 | Inlet hole |
| 1904 | Set of teeth | 19020 | Outlet hole |
| 1905 | Pawl | 20 | Safety rope |
| 1906 | Pawl fastener | 21 | Loop |
| 1907 | First threaded element | 22 | Safety pin |
| 1908 | Second threaded element | 23 | Swivel |
| 1909 | Guide element | 24 | Pulling kite |
| 19010 | Adjusting guide | 25 | Kite flying lines |
| 19011 | Relocatable element | 2501 | Front lines |
| 19012 | Threaded locking element | 2502 | Rear lines |
| 19013 | Fixed fastener | 26 | Control bar |
| 19014 | Multi-stage socket | 27 | Trapeze harness |
| | | 2071 | Harness hook |

## Claims

1. A device for connecting and releasing a connection between two elements (3, 8) comprising a body (1), to which an attached element (3) is fastened, and to which a first connecting member or assembly is attached (5, 501, 503), to which a second connecting member or assembly (7) is releasably connected, to which a detachable element (8) is fastened, and the device is further comprising a resilient element or assembly (11, 18, 5010), and a movement of an active release member (10), which is attached to the body (1), enables a release of the connection between the connecting members or assemblies (5, 503, 7), **wherein** on/in the body (1) and/or on/in release member (10) and/or between the body (1) and the release member (10) there is an adjusting element or assembly (12, 1201, 1202).

2. A device for connecting and releasing a connection between two elements (3, 8) comprising a body (1), to which an attached element (3) is fastened, and to which, by a cylindrical joint (6, 509), a first connecting member or assembly (5, 501, 503) is pivotably attached in a connection socket (4), and first connecting member or assembly (5, 501, 503) is releasably connected with a second connecting member or assembly (7), which is fastened to a detachable element (8), and device is further comprising a release member (10) attached to the body (1), **wherein** the release member (10) is connected to the first connecting member (5, 501, 503) and a movement of the first connecting member or assembly (5, 501, 503) is directly caused by acting on the first connecting member or assembly (5, 501, 503) with an active release member (10) and/or with an active second connecting member (7).

3. The device according to claim 1, **wherein** the movement of the first connecting member (5, 501, 503) is caused by acting on it with the active release member (10) and/or by acting on it with the active second connecting member or assembly (7), and/or the first connecting member (5, 501, 503) is attached rotatably by a cylindrical joint (6, 509)

4. The device according to claim 2, **wherein** on/in the body (1) and/or on/in release member (10) and/or between the body (1) and the release member (10) there is an adjusting element or assembly (12, 1201, 1202).

5. The device according to claim 1 and/or 4, **wherein** the adjusting element or assembly (12, 1201, 1202) is formed by at least one mobile element (1201) and/or at least one positioning element (1202) and/or at least one adjusting element (12, 19, 1203, 1204, 1205, 1206).

6. The device according to claim 1 or 2, **wherein** between the body (1) and/or the release member (10) and/or the first connecting member (5, 501, 503), there is the resilient element or assembly (11, 5010) and/or an additional resilient element (18) and/or a contact element (1109) and/or a piston (1002).

7. The device according to claim 1 and/or 4 and/or 6, **wherein** the resilient element or assembly (11) is joined with the adjusting element or assembly (12, 1201, 1202).

8. The device according to claim 1 and/or 4 and/or 5 and/or 7, **wherein** the adjusting element or assembly (12, 1201, 1202) comprises an assembly of threaded elements (1907,1908) and/or a threaded element (1907 or 1908) is threadedly connected with an integrated thread of the body (19016) and/or an integrated thread of the release member (19017).

9. The device according to claim 8, **wherein** one of the threaded elements (1907 or 1908) has an integrated or mounted guide element (1909), which, due to being held by the body (1) or a gouge (106) in the body (1), or the release member (10) or a gouge (10014) in the release member (10), prevents it from rotating together with the other threaded element (1908 or 1907).

10. The device according to claim 1 and/or 4 and/or 5 and/or 7, **wherein** the adjusting element or assembly (12, 1201, 1202) comprises a set of teeth (1904) and a pawl (1905).

11. The device according to claim 1 and/or 4 and/or 5 and/or 7, **wherein** the adjusting element or assembly (12, 1201, 1202) comprises an adjusting guide (19010) paired with a relocatable element (19011 and/or a multi-stage socket (19014) paired with an adjusting pin (19015).

12. The device according to claim 1 and/or 4 and/or 5 and/or 7, **wherein** the adjusting element or assembly (12, 1201, 1202) comprises a rope drum (1901) rotatably mounted on a drum pivot (1902) and/or comprises a clamping cleat.

13. The device according to claim 1 and/or 4 and/or 5 and/or 7, **wherein** the adjusting element or assembly (12, 1201, 1202) comprises a locking element (1203) and/or an adjusting knob (1204) and/or an intermediary span (1206) and/or a contact element (1109) and/or a scale (1205) which is provided adjacent the adjusting element or assembly (12, 1201, 1202).

14. The device according to claim 6 or 7, **wherein** the resilient element or assembly (11) is a compressible element (1101) and/or a tensible element (1102) and/or a twistable element (1103) and/or a bendable element (1204).

15. The device according to claim 14, **wherein** the resilient element or assembly (11) is in the form of a metal spring and/or a polymer spring and/or a resilient arm and/or a resilient line and/or a magnetic assembly (1107, 1108).

16. The device according to claim 1 or 2 and/or 3, **wherein** the connecting member (5, 7) comprises a catching element (503) and/or is formed by an assembly of a connecting member base (501) and the catching element (503) or by an assembly of the connecting member base (501) connected with the catching element (503) by a cylindrical joint (509, 6) and/or by a resilient element (5010).

17. The device according to claim 1 or 2 and/or 3, **wherein** the first connecting member (5, 501, 503) has a slant (505) on the outer side of its contour, which induces pivoting of the first connecting member or assembly (5, 501, 503) on the cylindrical joint (6, 509) acted upon the second connecting member or assembly (7) and/or the second connecting member (7) has a slant (702) on the outer side of its contour, which induces pivoting of the first connecting member or assembly (5, 501, 503) on the cylindrical joint (6, 509) acted upon the second connecting member or assembly (7).

18. The device according to claim 1 or 2, **wherein** the connecting member (5, 7) is in the form of a hook and the opposite connecting member (7, 5) is in the form of a rim and/or the release member (10) is in the form of a release rim (1001).

19. The device according to claim 1 or 2, **wherein** the release member (10) is connected with the first connecting member or assembly (5, 501, 503) or is connected with it by a link (14, 15, 16) and/or 19. The device according to claim 1 or 2, **wherein** the release member (10) is connected with the first connecting member or assembly (5, 501, 503) or is connected with it by a link (14, 15, 16) and/or by a link (14, 15, 16) which is mounted in a guide groove (101, 1003) and/or by an intermediary element or assembly (13) comprising a push rod (1301, 1302) and/or release tie (1305) and/or a piston (1002).

20. The device according to claim 1 or 2, **wherein** the body (1) is divided into two parts (107 and 108) and/or the release member (10) is divided into two parts (1004 and 1005).

21. The device according to claim 1 or 2, **wherein** the attached element (3) is fastened to the body (1) by a fixed fastener (2) or by a rotary link (201) and/or by a swivel (23).

22. The device according to claim 1 or 2, **wherein** the body (1) comprises a channel (104) for a safety line (20) and/or the attached element (3) is connected to the canopy of a pulling kite (24) and the detachable element (8) is attachable to a trapeze harness (27).

23. The device according to claim 1 or 2 and/or 22, **wherein** the detachable element (8) is fixed to the body (1) with its other end (803), forming a loop (21), and a safety pin (22) is attached to the body (1) near the loop (21).
